# EUROPEAN PATENT APPLICATION

(11) **EP 4 545 779 A1**
(43) Date of publication of application: **30.04.2025**
(21) Application number: 24195788.5
(22) Date of filing: 22.08.2024
(51) Int. Cl.: F02M 35/10

(54) **SENSOR UNIT**

(30) Priority: 27.10.2023 JP 2023184479; 22.12.2023 JP 2023216381
(71) Applicant: MIKUNI CORPORATION, Chiyoda-ku Tokyo 101-0021 (JP)
(72) Inventor: SEKIGUCHI, Shinichi, Odawara-shi, Kanagawa, 2500055 (JP); KITAOKA, Tatsuya, Odawara-shi, Kanagawa, 2500055 (JP); SUGIZAKI, Yuuta, Odawara-shi, Kanagawa, 2500055 (JP)
(74) Representative: Kurig, Thomas

(57) **Abstract**

A sensor unit (U) arranged in an intake pipe (Ip) of an internal combustion engine (E) includes: sensors (30 and 40), detecting a state quantity of intake air flowing through an intake passage (Ip₁) defined by the intake pipe (Ip); and a case (Ca), accommodating the sensors (30 and 40). The case (Ca) includes: a first passage (24) and a second passage (25), communicating with each other and each opening to the intake passage (Ip₁) so as to expose detection parts (Rc, 41) of the sensors (30 and 40) to the intake air flowing through the intake passage (Ipi); and a collision wall (26a), colliding with the intake air flowing through the intake passage (Ip₁) in the vicinity of an opening of the second passage (25).

Representative drawing: FIG. 12

## Description

### BACKGROUND

### Technical Field

The present disclosure relates to a sensor unit which is applied to an intake system of an internal combustion engine mounted on an automobile, a motorcycle, or any other vehicle and detects a state quantity (pressure, temperature) of intake air, and relates to an intake system of an internal combustion engine.

### Related Art

As a conventional sensor unit, a temperature sensor-integrated pressure sensor device has been known which includes: a case, where a terminal is inserted; a pressure detection element, connected to the terminal and arranged within the case; a port, connected to the case and having one pressure introduction hole leading to a pressure receiving chamber of the pressure detection element; and a temperature detection element, connected to the terminal and provided at a tip of the port (for example, see Japanese Patent Laid-open No. 2006-194683 and Japanese Patent Laid-open No. 2005-274412).

In the above temperature sensor-integrated pressure sensor device, the pressure introduction hole formed in the port is formed as one linear passage having relatively large passage area. Accordingly, in the case where foreign matter is present within an intake manifold, there is a risk that the foreign matter may enter the pressure receiving chamber through the pressure introduction hole, and a pressure of intake air cannot be accurately detected.

As another sensor unit, a pressure sensor device has been known which includes: a sensor storage container, including a base and a box-shaped housing; a pressure detection element, arranged within the housing; a pressure introduction path, formed by the base and a pipe and leading to a pressure introduction chamber of the pressure detection element; a temperature sensor, arranged within a temperature sensor storage protrusion formed on the base; and a circuit board, to which the pressure detection element and the temperature sensor are electrically connected, and arranged within the housing (for example, see Japanese Patent Laid-open No. H11-30535).

In the above pressure sensor device, in order to prevent foreign matter from entering the pressure introduction chamber through the pressure introduction path, in the vicinity of an open end of the pressure introduction path, a labyrinth structure is formed whose passage area is reduced. Accordingly, in a region of this labyrinth structure, there is a risk that a liquid, for example, a liquid or liquid-like substance such as fuel caused by blowback, moisture in intake air, and blow-by gas, may adhere to the inside of a passage or freeze when it is cold, the passage may further be narrowed or blocked, and a pressure of intake air cannot be accurately detected.

### SUMMARY OF THE INVENTION

### Problems to Be Solved by the Invention

The present disclosure has been made in view of the above circumstances, and an object thereof is to provide a sensor unit, and an intake system of an internal combustion engine, in which a flow of intake air can be actively generated in a passage leading from a detection part of a sensor to an intake passage, adhesion or freezing of a liquid or liquid-like substance such as fuel, moisture in the intake air, and blow-by gas can be suppressed or prevented, and a state quantity of the intake air can be detected with high accuracy.

### Means for Solving the Problems

A sensor unit of the present disclosure is a sensor unit arranged in an intake pipe of an internal combustion engine. The sensor unit is configured to include: a sensor, detecting a state quantity of intake air flowing through an intake passage defined by the intake pipe; and a case, accommodating the sensor. The case is configured to include: a first passage and a second passage, communicating with each other and each opening to the intake passage so as to expose a detection part of the sensor to the intake air flowing through the intake passage; and a collision wall, colliding with the intake air flowing through the intake passage in the vicinity of an opening of the second passage.

In the above sensor unit, the following configuration may be adopted. The collision wall includes a guide part that guides the intake air flowing through the intake passage toward inside the second passage.

In the above sensor unit, the following configuration may be adopted. The guide part includes a curved surface inclined toward inside the second passage.

In the above sensor unit, the following configuration may be adopted. The guide part includes side surfaces continuously formed on both sides of the curved surface.

In the above sensor unit, the following configuration may be adopted. The first passage has a first opening that opens on a first end face away from an inner wall surface of the intake pipe toward a central side. The second passage has a second opening that opens on a second end face closer to the inner wall surface of the intake pipe than the first opening.

In the above sensor unit, the following configuration may be adopted. The case includes a sleeve extending in a predetermined axis direction. The sleeve includes a partition wall that defines the first passage and the second passage to extend adjacent to each other. The partition wall includes the collision wall.

In the above sensor unit, the following configuration may be adopted. The sensor includes: a pressure sensor, detecting a pressure of the intake air; and a temperature sensor, detecting a temperature of the intake air. The case includes: a case body, accommodating the temperature sensor and the pressure sensor; and a sleeve, joined to the case body and defining the first passage, the second passage, and the collision wall.

In the above sensor unit, the following configuration may be adopted. The first passage and the second passage are each formed to extend from a region facing a detection part of the temperature sensor to the intake passage. A detection part of the pressure sensor is formed to face the middle of the second passage.

In the above sensor unit, the following configuration may be adopted. The case body includes a recess that exposes the detection part of the temperature sensor. The sleeve includes a protruding wall inserted into the recess to define a portion of the first passage and the second passage in cooperation with the recess.

In the above sensor unit, the following configuration may be adopted. The second passage includes a bent passage between a region facing the detection part of the pressure sensor and the region facing the detection part of the temperature sensor. The first passage includes a bent passage in the middle thereof from the region facing the detection part of the temperature sensor to a first opening that opens to the intake passage.

In the above sensor unit, the following configuration may be adopted. The first passage and the second passage include a bent passage formed by being three-dimensionally bent.

In the above sensor unit, the following configuration may be adopted. An inner wall surface of the bent passage is formed curved so as to be continuous in a streamlined manner.

In the above sensor unit, the following configuration may be adopted. The detection part of the pressure sensor includes a pressure receiving chamber exposed to the intake air. The pressure receiving chamber is formed to communicate with the second passage through a communication hole having opening area smaller than passage area of the second passage.

In the above sensor unit, the following configuration may be adopted. The communication hole is arranged to face a second opening of the second passage that opens to the intake passage in an extension direction of the second passage.

In the above sensor unit, the following configuration may be adopted. The sensor unit includes a circuit board that has the pressure sensor and the temperature sensor electrically connected thereto and that is accommodated in the case body.

In the above sensor unit, the following configuration may be adopted. The temperature sensor is a surface mount temperature sensor mounted on the circuit board.

In the above sensor unit, the following configuration may be adopted. The sensor unit includes a first communication path and a second communication path. The first communication path includes the first passage and a first ventilation hole, the first passage having predetermined passage area and a first passage length, the first ventilation hole leading to the first passage and having opening area smaller than the passage area of the first passage. The second communication path includes the second passage and a second ventilation hole, the second passage having the same passage area as the first passage and a second passage length shorter than the first passage length, the second ventilation hole leading to the second passage and having opening area smaller than the passage area of the second passage.

In the above sensor unit, the following configuration may be adopted. The sensor includes a pressure sensor that detects a pressure of the intake air. The pressure sensor includes a sensor body and a sensor cover, the sensor body including a pressure receiving part, the sensor cover being connected to the sensor body so as to cover the pressure receiving part and define the pressure receiving chamber. The first ventilation hole and the second ventilation hole are formed in the sensor cover.

In the above sensor unit, the following configuration may be adopted. The first ventilation hole and the second ventilation hole are formed in an offset manner close to a side part outside a central region of the pressure receiving chamber.

In the above sensor unit, the following configuration may be adopted. The case includes a case body and a sleeve, the case body including a joint surface joined to the intake pipe, the sleeve having a cylindrical shape protruding in a predetermined axis direction from the case body. The first passage and the second passage are formed to extend within the sleeve.

In the above sensor unit, the following configuration may be adopted. The sensor unit includes a temperature sensor that detects a temperature of the intake air in the intake pipe. The case includes a second accommodation part that accommodates the temperature sensor.

In the above sensor unit, the following configuration may be adopted. The case includes a case body and a sleeve, the case body including a joint surface joined to the intake pipe, the sleeve having a cylindrical shape protruding in a predetermined axis direction from the case body. The first passage, the second passage, and the second accommodation part are formed to extend within the sleeve.

In the above sensor unit, the following configuration may be adopted. The case includes: a case body, including a joint surface joined to the intake pipe; a sleeve, protruding in a predetermined axis direction from the case body and defining the first passage, the second passage, and the collision wall; and an annular groove, formed on an outer periphery of the sleeve and having an annular seal member fitted therein.

In the above sensor unit, the following configuration may be adopted. The sleeve includes: a large diameter cylindrical part, protruding from the joint surface; and a small diameter cylindrical part, continuous with the large diameter cylindrical part. The annular groove is formed in the large diameter cylindrical part.

An intake system of an internal combustion engine of the present disclosure is configured to include: an intake pipe, defining an intake passage that guides intake air to a combustion chamber of the internal combustion engine; a fuel injection valve, injecting fuel to middle of the intake passage or to the combustion chamber; a throttle device, provided in middle of the intake pipe, opening and closing the intake passage; and a sensor unit, detecting a state quantity of the intake air flowing through the intake passage. As the sensor unit, a sensor unit having any of the above configurations is adopted.

In the above intake system of an internal combustion engine, the following configuration may be adopted. The sensor unit is arranged in the intake pipe downstream of the throttle device.

### Effects of the Invention

According to the sensor unit having the above configuration, a flow of intake air can be actively generated in a passage leading from a detection part of a sensor to an intake passage, adhesion or freezing of a liquid or liquid-like substance such as fuel, moisture in the intake air, and blow-by gas can be suppressed or prevented, and a state quantity (pressure, temperature) of the intake air can be detected with high accuracy.

### BRIEF DESCRIPTION OF THE DRAWINGS

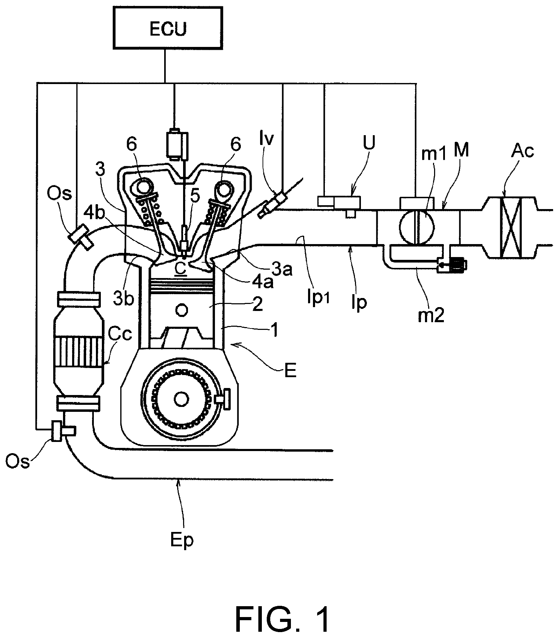

FIG. 1 is a system diagram showing an intake system of an internal combustion engine to which a sensor unit according to the present disclosure is applied.
FIG. 2 shows the sensor unit according to a first embodiment, and is an external perspective view as viewed from a joint surface side of a case joined to an intake pipe.
FIG. 3 is a partial cross-sectional view showing a state in which the sensor unit according to the first embodiment is attached to the intake pipe.
FIG. 4 is an exploded perspective view of the sensor unit according to the first embodiment, as viewed from one side.
FIG. 5 is an exploded perspective view of the sensor unit according to the first embodiment, as viewed from the other side.
FIG. 6 is a perspective cross-sectional view showing a sleeve constituting a portion of the case in the sensor unit according to the first embodiment.
FIG. 7 is a perspective cross-sectional view showing the sleeve constituting a portion of the case in the sensor unit according to the first embodiment.
FIG. 8 is a cross-sectional view of the sensor unit according to the first embodiment, taken along a plane passing through a center line of a communication hole leading to a detection part (pressure receiving chamber) of a pressure sensor.
FIG. 9 is a cross-sectional view of the sensor unit according to the first embodiment, taken along a plane including a bent passage constituting a portion of a second passage leading from the detection part of the pressure sensor to a detection part of a temperature sensor.
FIG. 10 is a cross-sectional view of the sensor unit according to the first embodiment, taken along a plane including a first passage opening from the detection part of the temperature sensor to an intake passage.
FIG. 11 is a perspective cross-sectional view showing a flow of intake air from a collision wall to the second passage and the first passage in the sensor unit according to the first embodiment.
FIG. 12 is a schematic diagram describing a flow of intake air in the first passage and the second passage in the sensor unit according to the first embodiment, with the sensor unit attached to the intake pipe.
FIG. 13 shows the sensor unit according to a second embodiment, and is an external perspective view as viewed from the joint surface side of the case joined to the intake pipe.
FIG. 14 is a partial cross-sectional view showing a state in which the sensor unit according to the second embodiment is attached to the intake pipe.
FIG. 15 is an exploded perspective view of the sensor unit according to the second embodiment as viewed from a sleeve side, in which the sleeve is disassembled from a case body.
FIG. 16 is a perspective cross-sectional view showing the sleeve constituting a portion of the case in the sensor unit according to the second embodiment.
FIG. 17 is a perspective cross-sectional view showing a flow of intake air from the collision wall to the second passage and the first passage in the sensor unit according to the second embodiment.
FIG. 18 is a schematic diagram describing a flow of intake air in the first passage and the second passage in the sensor unit according to the second embodiment, with the sensor unit attached to the intake pipe.
FIG. 19 shows the sensor unit according to a third embodiment, and is an enlarged external perspective view showing the sleeve constituting a portion of the case.
FIG. 20 is a perspective cross-sectional view showing the sleeve constituting a portion of the case in the sensor unit according to a fourth embodiment.
FIG. 21 is a perspective cross-sectional view showing the sleeve constituting a portion of the case in the sensor unit according to the fourth embodiment.
FIG. 22 is a cross-sectional view of the sensor unit according to the fourth embodiment, taken along a plane including the bent passage constituting a portion of the second passage leading from the detection part of the pressure sensor to the detection part of the temperature sensor.
FIG. 23 is a cross-sectional view of the sensor unit according to the fourth embodiment, taken along a plane including the first passage opening from the detection part of the temperature sensor to the intake passage.
FIG. 24 is a perspective cross-sectional view showing a flow of intake air from the collision wall to the second passage and the first passage in the sensor unit according to the fourth embodiment.
FIG. 25 is a schematic diagram describing a flow of intake air in the first passage and the second passage in the sensor unit according to the fourth embodiment, with the sensor unit attached to the intake pipe.
FIG. 26 shows the sensor unit according to a fifth embodiment, and is an external perspective view of the case as viewed from the outside.
FIG. 27 shows the sensor unit according to the fifth embodiment, and is an external perspective view as viewed from the joint surface side of the case joined to the intake pipe.
FIG. 28 shows the sensor unit according to the fifth embodiment, and is a plan view of the joint surface of the case joined to the intake pipe.
FIG. 29 is a partial cross-sectional view showing a state in which the sensor unit according to the fifth embodiment is attached to the intake pipe.
FIG. 30 is an exploded perspective view of the sensor unit according to the fifth embodiment, as viewed from one side.
FIG. 31 is an exploded perspective view of the sensor unit according to the fifth embodiment, as viewed from the other side.
FIG. 32 is a cross-sectional view of the sensor unit according to the fifth embodiment, taken along a plane passing through a center line of a first ventilation hole and a center line of a second ventilation hole.
FIG. 33 is a cross-sectional view of the sensor unit according to the fifth embodiment, taken along a plane including a center line of a first passage forming a first communication path and the center line of the first ventilation hole.
FIG. 34 is a cross-sectional view of the sensor unit according to the fifth embodiment, taken along a plane including a center line of a second passage forming a second communication path and the center line of the second ventilation hole.
FIG. 35 is a perspective cross-sectional view of the pressure sensor (sensor body, sensor cover) in the sensor unit according to the fifth embodiment.
FIG. 36 is an exploded perspective view of the sensor body and the sensor cover that constitute the pressure sensor in the sensor unit according to the fifth embodiment.
FIG. 37 is a cross-sectional view showing the temperature sensor accommodated in a second accommodation part in the sensor unit according to the fifth embodiment.
FIG. 38 is a schematic diagram showing a relationship between a flow velocity distribution of intake air in the intake passage and regions where the first communication path and the second communication path open in a state in which the sensor unit according to the fifth embodiment is attached to the intake pipe downstream of the throttle device (butterfly-type throttle valve).
FIG. 39 is a schematic diagram showing a relationship between a flow velocity distribution of intake air in the intake passage and regions where the first communication path and the second communication path open in a state in which the sensor unit according to the fifth embodiment is attached to the intake pipe downstream of the throttle device (butterfly-type throttle valve).
FIG. 40 is a schematic diagram describing a flow of intake air in a communication path (first communication path including first passage and first ventilation hole, and second communication path including second passage and second ventilation hole) that communicates the pressure receiving chamber with the intake passage in the sensor unit according to the fifth embodiment.
FIG. 41 is a schematic diagram showing a relationship between a flow velocity distribution of intake air in the intake passage and regions where the first communication path and the second communication path open in a state in which the sensor unit according to another embodiment is attached to the intake pipe.
FIG. 42 is a schematic diagram describing a flow of intake air in the communication path (first communication path including first passage and first ventilation hole, and second communication path including second passage and second ventilation hole) that communicates the pressure receiving chamber with the intake passage in the sensor unit according to still another embodiment.

### DESCRIPTION OF THE EMBODIMENTS

Hereinafter, embodiments of the present disclosure will be described with reference to the accompanying drawings.

A sensor unit U of the present disclosure is incorporated into, for example, an intake system of an internal combustion engine E mounted on a vehicle such as an automobile or a motorcycle.

The internal combustion engine E includes: a cylinder block 1; a piston 2; a cylinder head 3; an intake valve 4a, opening and closing an intake port 3a; an exhaust valve 4b, opening and closing an exhaust port 3b; a spark plug 5; a cam mechanism 6, driving the intake valve 4a and the exhaust valve 4b; and so on.

The intake system of the internal combustion engine E includes: an intake pipe Ip, connected to the cylinder head 3 in order to lead to the intake port 3a; a throttle device M, connected to the middle of the intake pipe Ip; an air cleaner Ac, connected to an upstream end of the intake pipe Ip; a fuel injection valve Iv, arranged downstream of the intake pipe Ip; the sensor unit U, arranged downstream of the throttle device M and upstream of the fuel injection valve Iv in the intake pipe Ip; and so on.

The intake pipe Ip defines an intake passage Ipi that guides intake air to a combustion chamber C of the internal combustion engine E.

The throttle device M includes: a butterfly-type throttle valve m1, opening and closing the intake passage Ipi; a bypass passage m2, bypassing the throttle valve m1; and so on.

An exhaust system of the internal combustion engine E includes: an exhaust pipe Ep, connected to the cylinder head 3 in order to lead to the exhaust port 3b; a catalytic converter Cc and an oxygen sensor Os, arranged in the middle of the exhaust pipe Ep; and so on.

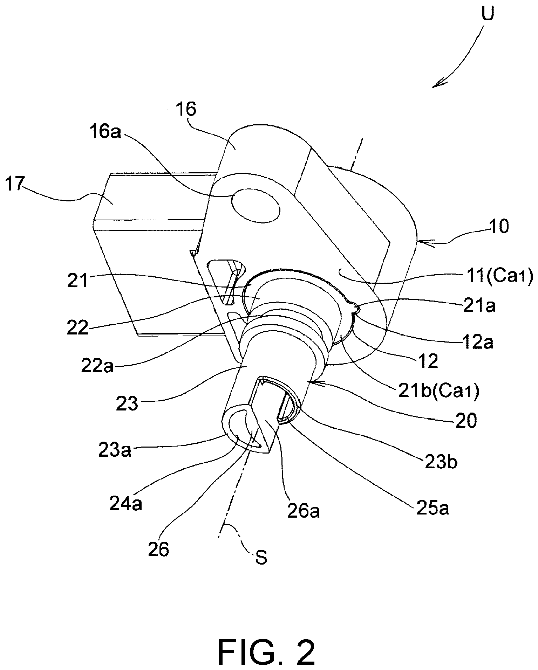

As shown in FIG. 2 to FIG. 12, the sensor unit U according to the first embodiment includes: a case body 10, and a sleeve 20 extending in an axis S direction, serving as a case Ca; a pressure sensor 30; a temperature sensor 40; a circuit board 50; a plurality of terminals 60; and a mold resin material 70.

The case body 10 is molded using a resin material. The case body 10 includes: a joint surface 11 constituting a portion of a joint surface Cai of the case Ca; a fitting recess 12; a recess 13; accommodation parts 14 and 15; a flange 16; and a connector 17.

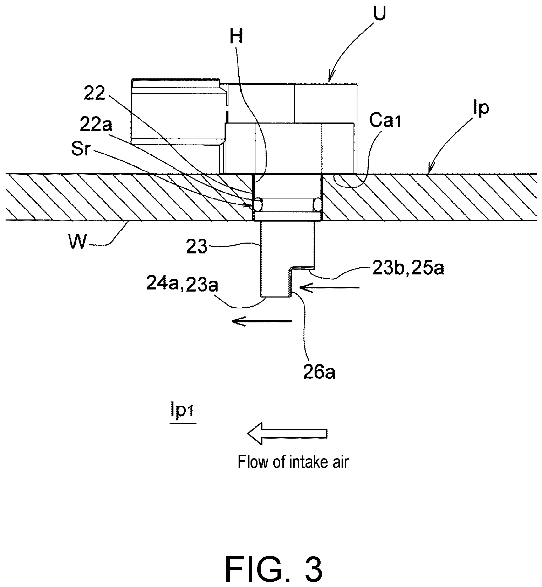

As shown in FIG. 3, the joint surface 11 is formed as a flat surface to be joined to an outer wall of the intake pipe Ip.

The fitting recess 12 is a region into which the sleeve 20 is fitted and joined. The fitting recess 12 is formed as an annular recess, and includes in a portion of an inner peripheral surface thereof a lightening part 12a for positioning.

The recess 13 is formed to be recessed in a substantially rectangular shape from a bottom surface 12b of the fitting recess 12, so that a protruding wall 27 of the sleeve 20 is inserted therein, and a detection part 41 of the temperature sensor 40 is defined continuous with a bottom surface 13a of the recess 13.

The accommodation part 14 is a region that accommodates and holds the pressure sensor 30, and is formed in a region adjacent to the bottom surface 12b of the fitting recess 12.

The accommodation part 15 is a region that accommodates and holds the circuit board 50, and is formed in a region opposite to the joint surface 11.

The flange 16 defines a portion of the joint surface 11, and includes a circular hole 16a through which a fastening screw (not shown) that is screwed into a screw hole of the intake pipe Ip passes.

The connector 17 protrudes in a direction perpendicular to the axis S, and is formed to expose and surround a plurality of (here, four) terminals 60 connected to the circuit board 50 and to be connected to the outside.

The sleeve 20 is molded using a resin material. The sleeve 220 is formed in a cylindrical shape extending in the axis S direction, and includes: the fitting part 21; the large diameter cylindrical part 22; the small diameter cylindrical part 23; a first passage 24; a second passage 25; the partition wall 26, providing a partition between the first passage 24 and the second passage 25; and the protruding wall 27, protruding in the axis S direction from the fitting part 21.

The fitting part 21 is formed in a disk shape, and includes: a positioning protrusion 21a, formed on a portion of an outer periphery thereof; a joint surface 21b of an annular shape, flush with the joint surface 11 in order to constitute a portion of the joint surface Cai; and an end face 21c, in close contact with the bottom surface 12b of the fitting recess 12 of the case body 10. Since the fitting part 21 is closely fitted into the fitting recess 12 of the case body 10, the sleeve 20 is joined to the case body 10, and the case Ca is defined.

The large diameter cylindrical part 22 is a region that is fitted into a fitting hole H of the intake pipe Ip. The large diameter cylindrical part 22 protrudes from the joint surface 21b of the fitting part 21, and includes in an outer periphery thereof an annular groove 22a formed in order for an annular seal member Sr to be fitted therein.

The annular seal member Sr is formed in an annular shape using a rubber material excellent in heat resistance, swelling resistance or the like, and is fitted into the annular groove 22a. As shown in FIG. 3, the annular seal member Sr seals between the fitting hole H of the intake pipe Ip and the sleeve 20 while the sensor unit U is assembled to the intake pipe Ip.

The small diameter cylindrical part 23 is formed continuous with the large diameter cylindrical part 22, and is a region that is arranged protruding into the intake passage Ipi while being joined to the intake pipe Ip.

The small diameter cylindrical part 23 includes, on a tip side in the axis S direction: a first end face 23a, defining a first opening 24a of the first passage 24; and a second end face 23b, located closer to the large diameter cylindrical part 22 than the first end face 23a and defining a second opening 25a of the second passage 25.

In a state in which the sensor unit U is attached to the intake pipe Ip, as shown in FIG. 3, the first end face 23a and the first opening 24a are positioned toward the center of the intake passage Ip₁ from an inner wall surface W of the intake pipe Ip, and the second end face 23b and the second opening 25a are positioned closer to the inner wall surface W of the intake pipe Ip than the first end face 23a.

In order to expose a detection part of a sensor to the intake air flowing through the intake passage Ipi, the first passage 24 is formed extending from a region At (recess 13 into which protruding wall 27 is inserted) facing the detection part 41 of the temperature sensor 40 in the axis S direction to the first opening 24a that opens on the first end face 23a.

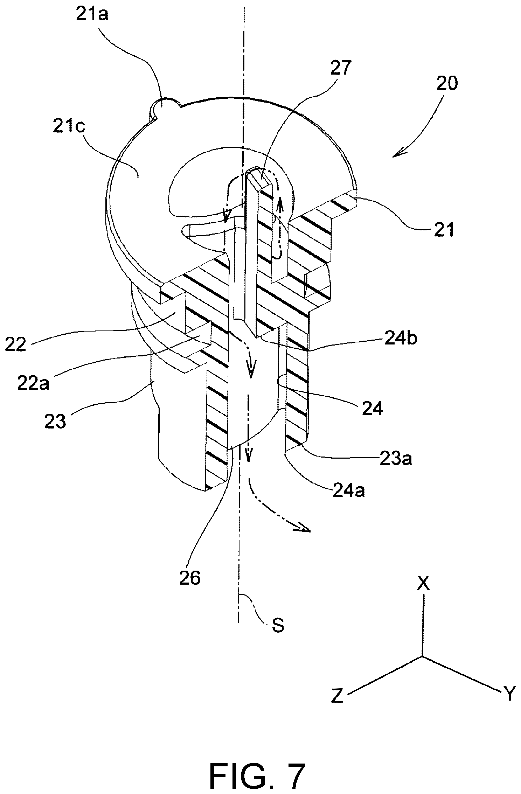

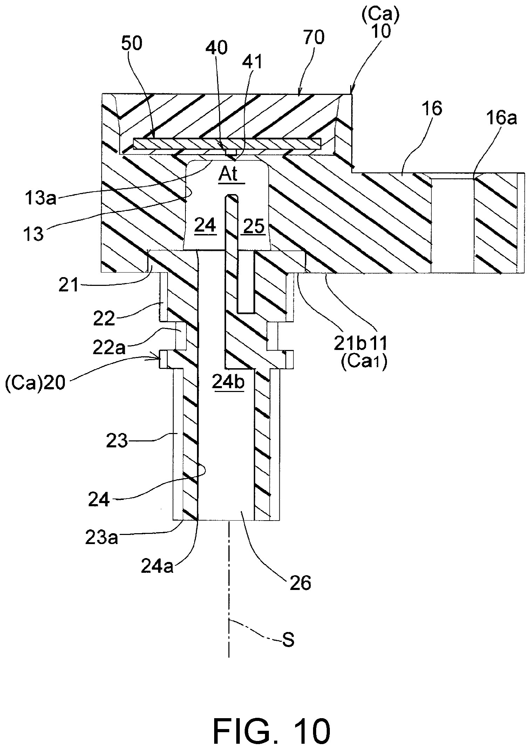

As shown in FIG. 7 and FIG. 10, the first passage 24 includes, in the middle thereof from the region At facing the detection part 41 of the temperature sensor 40 to the first opening 24a, a bent passage 24b defined by a bent inner wall surface.

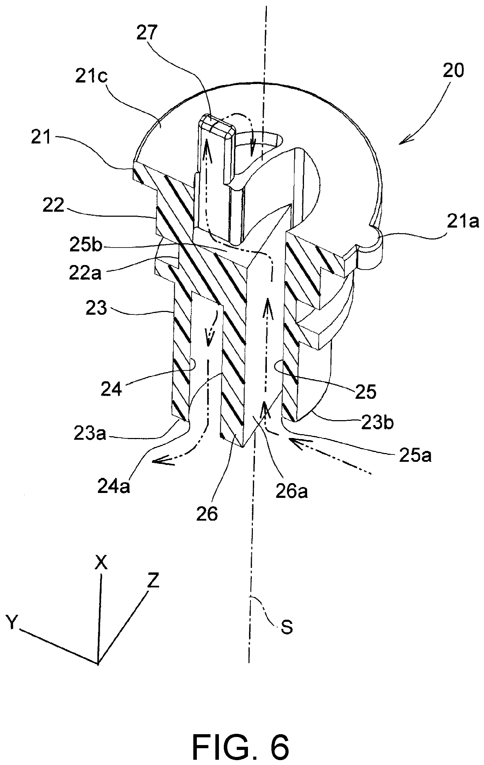

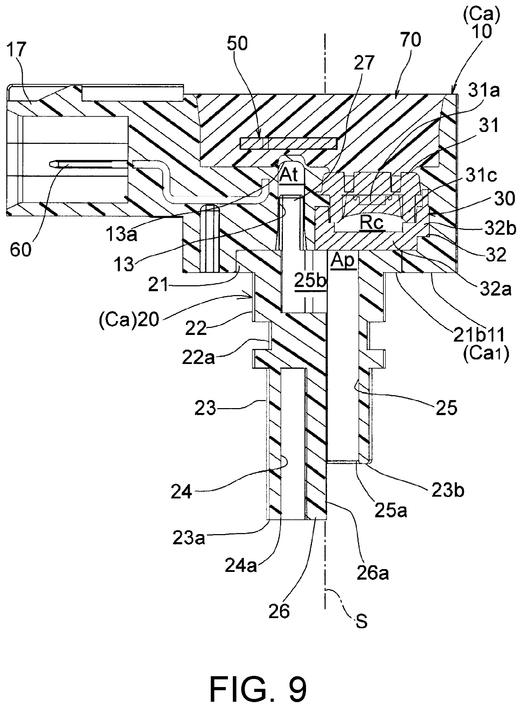

As shown in FIG. 6 and FIG. 9, the bent passage 24b is formed to two-dimensionally bend within an XY plane.

In order to expose a detection part of a sensor to the intake air flowing through the intake passage Ipi, the second passage 25 is formed extending from the region At (recess 13 into which protruding wall 27 is inserted) facing the detection part 41 of the temperature sensor 40 in the axis S direction to a second opening 25a that opens on the second end face 23b.

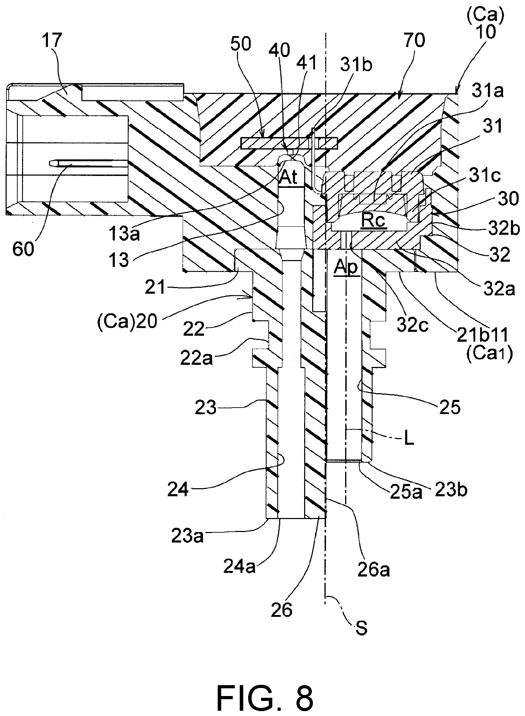

As shown in FIG. 8, the second passage 25 extends linearly along a straight line L in the axis S direction from the second opening 25a to a region Ap facing a detection part (pressure receiving chamber Rc) of the pressure sensor 30. As shown in FIG. 9, the second passage 25 includes, between the region Ap facing the detection part (pressure receiving chamber Rc) of the pressure sensor 30 and the region At facing the detection part 41 of the temperature sensor 40, a bent passage 25b defined by a bent inner wall surface.

As shown in FIG. 7 and FIG. 10, the bent passage 25b is formed to two-dimensionally bend within an XZ plane.

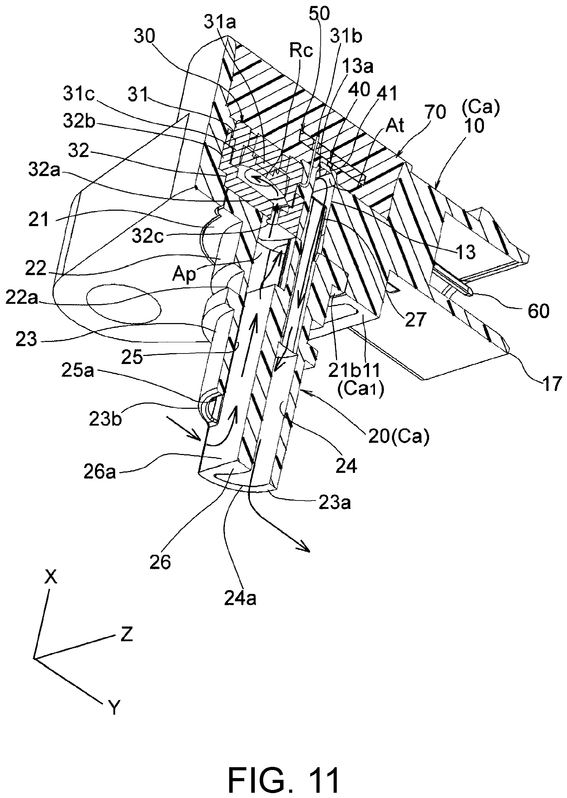

That is, the first passage 24 and the second passage 25 communicate with each other in the region At facing the detection part 41 of the temperature sensor 40 and each open to the intake passage Ipi. As shown in FIG. 11, the first passage 24 and the second passage 25 are formed to include, in a range from the region Ap facing the detection part (pressure receiving chamber Rc) of the pressure sensor 30 through the region At facing the detection part 41 of the temperature sensor 40 to a region in the middle of the first passage 24, the bent passages 24b and 25b that are formed by being three-dimensionally bent.

In this way, by including the bent passages 24b and 25b that are three-dimensionally bent, two passages (first passage 24 and second passage 25) can be arranged in an integrated manner toward the center compared to a case where the two passages as the first passage and the second passage are formed simply as two-dimensionally bent passages, and the sleeve 20 can be reduced in diameter and size.

The partition wall 26 extends in the axis S direction and provides a partition between the first passage 24 and the second passage 25. The partition wall 26 is formed to include a collision wall 26a in the vicinity of the second opening 25a on the tip side in the axis S direction.

As shown in FIG. 3, the collision wall 26a is formed as a flat surface arranged toward an upstream side of the intake passage Ipi in order to collide with the intake air flowing through the intake passage Ipi in the state in which the sensor unit U is attached to the intake pipe Ip.

In this way, since a portion of the partition wall 26 is formed to also serve as the collision wall 26a, the sleeve 20 can be simplified in shape compared to a configuration in which a collision wall following a second opening is separately provided.

The protruding wall 27 is formed as a substantially rectangular piece protruding in the axis S direction from an end face 21c of the fitting part 21. In the state in which the sleeve 20 is joined to the case body 10, the protruding wall 27 is inserted into the recess 13 of the case body 10, partially dividing the region At in the recess 13 into two, so as to define a portion of the first passage 24 and a portion of the second passage 25 in cooperation with the recess 13.

In this way, by inserting the protruding wall 27 into the recess 13 and defining a portion of the first passage 24 and a portion of the second passage 25, the recess 13 of the case body 10 can be simplified in shape, and the case body 10 can be easily removed from a mold when the case body 10 is molded.

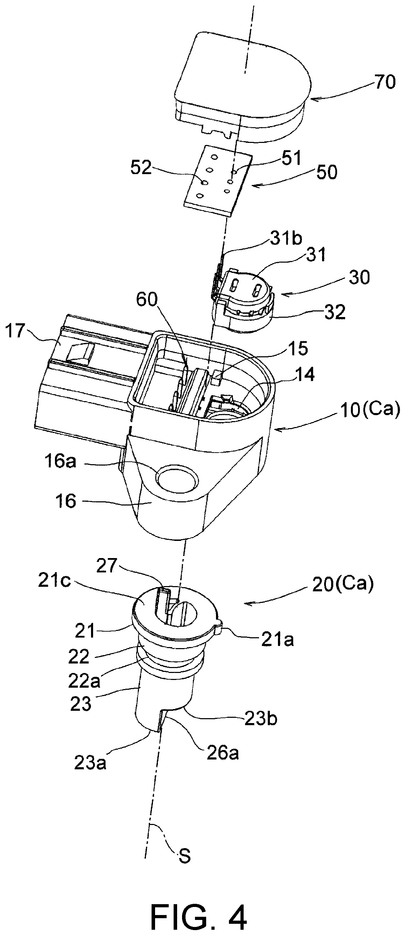

As shown in FIG. 4, FIG. 5, FIG. 8 and FIG. 11, the pressure sensor 30 is composed of a sensor body 31 and a sensor cover 32.

The sensor body 31 includes: a pressure receiving part 31a, such as a diaphragm including a semiconductor strain gauge; a lead wire 31b, extending from the pressure receiving part 31a; an annular part 31c, surrounding the pressure receiving part 31a; and so on.

The sensor cover 32 includes a bottom 32a of a disk shape, an annular outer wall 32b, and a communication hole 32c. The communication hole 32c is formed as a circular hole having opening area smaller than passage area of the second passage 25. In order to function as a protective cover that covers the pressure receiving part 31a and to define the pressure receiving chamber Rc as the detection part, the sensor cover 32 has the annular part 31c fitted into the annular outer wall 32b and is connected to the sensor body 31.

The pressure sensor 30 outputs, as an electrical signal, a change in electrical resistance according to the amount of deformation in the pressure receiving part 31a due to a pressure of the intake air guided into the pressure receiving chamber Rc through the communication hole 32c.

Here, the pressure receiving chamber Rc as the detection part of the pressure sensor 30 is formed to face the middle of the second passage 25 through the communication hole 32c.

As shown in FIG. 8, the communication hole 32c is arranged to face the second opening 25a of the second passage 25 that opens to the intake passage Ipi on the straight line L, that is, in an extension direction of the second passage 25.

While the sensor unit U is assembled to the intake pipe Ip, the pressure sensor 30 may detect a pressure of the intake air flowing through the intake passage Ipi downstream of the throttle device M.

In this way, since the pressure receiving chamber Rc communicates with the second passage 25 through the communication hole 32c, foreign matter or the like mixed in with the intake air can be prevented from entering the pressure receiving chamber Rc.

Since the communication hole 32c is arranged to face the second opening 25a of the second passage 25 on the straight line L, the intake air flowing in from the second opening 25a can be actively guided to the pressure receiving chamber Rc while passage resistance is suppressed.

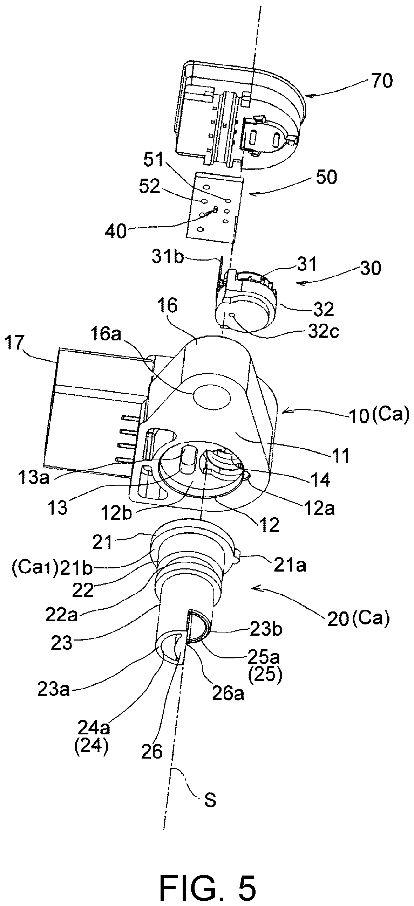

The temperature sensor 40 is a surface mount temperature sensor that constitutes a semiconductor chip. As shown in FIG. 5, the temperature sensor 40 is surface-mounted on the circuit board 50. In a state in which the circuit board 50 is accommodated in the accommodation part 15, as shown in FIG. 8, FIG. 10 and FIG. 11, the temperature sensor 40 includes the detection part 41 defined adjacent to the bottom surface 13a of the recess 13.

The detection part 41 may be exposed to the intake air flowing through the intake passage Ipi through the first passage 24 and the second passage 25 in a region of the recess 13.

While the sensor unit U is assembled to the intake pipe Ip, the temperature sensor 40 may detect a temperature of the intake air flowing through the intake passage Ipi downstream of the throttle device M.

In this way, by using a surface mount temperature sensor as the temperature sensor 40, the sleeve 20 can be reduced in size, and components in the case Ca can be integrated and reduced in size.

The circuit board 50 has printed wiring and various electronic components (not shown) mounted on its surface. As shown in FIG. 4 and FIG. 5, the circuit board 50 includes three through holes 51 to which the lead wire 31b of the pressure sensor 30 is electrically connected, and four through holes 52 to which four terminals 60 are electrically connected.

During assembly, the circuit board 50 is arranged in the accommodation part 15 of the case body 11, having the lead wire 31b and the terminal 60 electrically connected thereto, and is then covered and sealed with the mold resin material 70.

The terminal 60 is made of a conductive metal material. As shown in FIG. 4 and FIG. 9, the terminal 60 is embedded in the case body 11, has one end connected to the through hole 52 of the circuit board 50, and is arranged to have its free end side exposed inside the connector 17 and surrounded by the connector 17.

The mold resin material 70 is a sealing material such as epoxy resin. With the pressure sensor 30, and the circuit board 50 mounted with the temperature sensor 40 and other electronic components (not shown) accommodated and held in the accommodation part 14 and the accommodation part 15 of the case body 10, respectively, the mold resin material 70 is injected into the case body 10 to fill gaps and spaces and is solidified.

Next, a principle that a detection part (pressure receiving chamber Rc of pressure sensor 30 and detection part 41 of temperature sensor 40) of a sensor in the sensor unit U having the above configuration is exposed to the intake air flowing through the intake passage Ipi via the first passage 24 and the second passage 25 will be described.

In the intake air flowing through the intake passage Ipi, for an inviscid and incompressible fluid in the case of not being ultrafast, Bernoulli's law that "kinetic energy + pressure energy + potential energy = constant" can be approximately used.

Specifically, when the density of the fluid is ρ (kg/m³), the flow velocity is V (m/s), the pressure is P (pa), the gravitational acceleration is g (m/s²), and the height position is Z, the following expression is achieved: ρV²/2 + P + ρgZ = constant. In the flow of intake air in the intake pipe Ip, since potential energy can be ignored, the following approximation is possible: ρV²/2 + P = constant.

That is, in the intake passage Ipi, the following relationships are established: as the flow velocity V increases (faster), the pressure P decreases (lower); as the flow velocity V decreases (slower), the pressure P increases (higher).

Here, in the case where the collision wall 26a is arranged parallel to a flow direction of the intake air and the sensor unit U is attached to the intake pipe Ip, the intake air flowing through the intake passage Ipi does not collide with the collision wall 26a. In this case, between a pressure P1 in the vicinity of the first opening 24a (first end face 23a) of the first passage 24 and a pressure P2 in the vicinity of the second opening 25a (second end face 23b) of the second passage 25, a relationship of a pressure difference ΔPo (= P2 - P1 = (V1² - V2²)/2) is established.

On the other hand, as shown in FIG. 3, when the sensor unit U is attached to the intake pipe Ip with the collision wall 26a facing toward the upstream side of an intake air flow so that the intake air flowing through the intake passage Ipi collides with the collision wall 26a, in the vicinity of the second opening 25a, the intake air collides with the collision wall 26a, and a stagnation region Sa occurs where the velocity of the intake air becomes zero (V2 = 0).

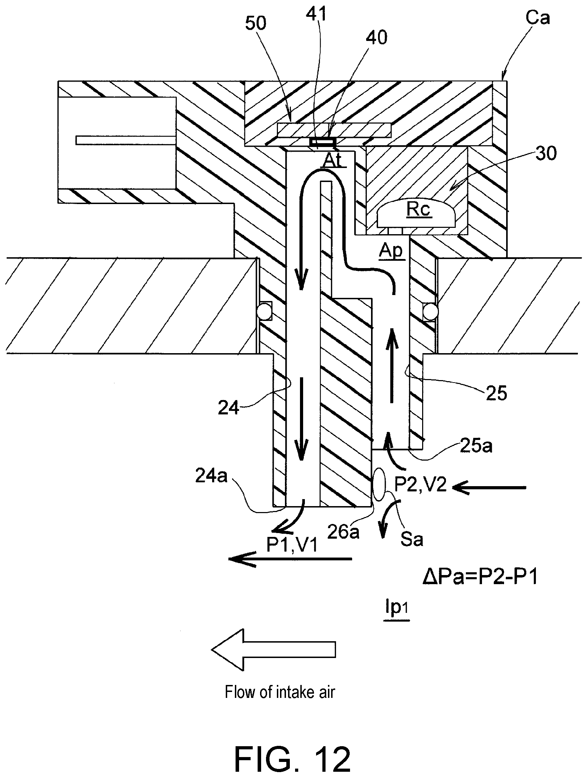

Accordingly, as shown in FIG. 12, the pressure difference between the vicinity of the second opening 25a where the stagnation region Sa occurs and the vicinity of the first opening 24a satisfies ΔPa = P2 - P1 = V1²/2.

That is, the following relationship is established: ΔPa > ΔPo. Due to the pressure difference ΔPa, the intake air flowing through the intake passage Ipi flows from the second opening 25a into the second passage 25, passes through the region Ap facing the detection part (pressure receiving chamber Rc) of the pressure sensor 30 and the region At facing the detection part 41 of the temperature sensor 40, and flows through the first passage 24 and then flows out again to the intake passage Ipi from the first opening 24a.

Accordingly, in the sensor unit U, by generating a flow of intake air in the first passage 24 and the second passage 25, it can be suppressed or prevented that a liquid or liquid-like substance such as fuel, moisture in the intake air, and blow-by gas adheres to the inside of the passage, and freezing of adhered substances or the like can be prevented. Hence, the pressure sensor 30 is able to detect with high accuracy the pressure of the intake air guided to the detection part (pressure receiving chamber Rc), and the temperature sensor 40 is able to detect with high accuracy the temperature of the intake air guided to the detection part 41.

Here, since the detection part (pressure receiving chamber Rc) of the pressure sensor 30 communicates with the second passage 25 through the communication hole 32c that has the opening area smaller than the passage area of the second passage 25, foreign matter or the like mixed in with the intake air can be prevented from entering the pressure receiving chamber Rc.

Even if the temperature sensor 40 is mounted on the circuit board 50 and the detection part 41 is arranged on a deep side of the case Ca, since the second passage 25 and the first passage 24 are connected to the region At facing the detection part 41, the intake air flowing through the intake passage Ipi can be guided to the region At, and the detection part 41 can be reliably exposed to the intake air.

Next, in the internal combustion engine E equipped with the sensor unit U, a detection operation of the sensor unit U will be described.

First, when the internal combustion engine E is in an idle operating range, the throttle valve m1 has closed the intake passage Ipi. The intake air flowing through the intake passage Ipi flows through the bypass passage m2 so as to bypass the throttle valve m1, and then flows out again to the intake passage Ipi on the downstream side.

On the other hand, when the internal combustion engine E is in an operating range other than the idle operating range, the throttle valve m1 is in a predetermined opening degree range and has opened the intake passage Ipi.

Accordingly, the intake air flowing through the intake passage Ipi flows through the intake passage Ipi and is drawn into the internal combustion engine E, without passing through the bypass passage m2.

In an operating state of the internal combustion engine E, a pressure and a temperature, which are state quantities of the intake air, are detected by the sensor unit U downstream of the throttle device M.

That is, the pressure of the intake air flowing through the intake passage Ipi via the second passage 25 and the communication hole 32c is detected by the pressure sensor 30. By the communication hole 32c, foreign matter or the like can be prevented from entering the pressure receiving chamber Rc.

The temperature of the intake air in the region At where the second passage 25 makes a U-turn toward the first passage 24 is detected by the temperature sensor 40.

In this way, the pressure of the intake air is detected by the pressure sensor 30, the temperature of the intake air is detected by the temperature sensor 40, the respectively detected information is incorporated as ECU control information, and the internal combustion engine E is appropriately controlled.

As described above, the sensor unit U is configured to include: the sensor (pressure sensor 30 and temperature sensor 40), detecting a state quantity of the intake air flowing through the intake passage Ipi defined by the intake pipe Ip; and the case Ca, accommodating the sensor. The case Ca is configured to include: the first passage 24 and the second passage 25, communicating with each other and each opening to the intake passage Ipi so as to expose the detection part (pressure receiving chamber Rc, detection part 41) of the sensor to the intake air flowing through the intake passage Ipi; and the collision wall 26a, colliding with the intake air flowing through the intake passage Ipi in the vicinity of the opening of the second passage 25.

According to this, the following continuous flow of intake air can be generated: the pressure difference ΔPa occurs between the vicinity of the first opening 24a of the first passage 24 and the vicinity of the second opening 25a of the second passage 25, the intake air flowing through the intake passage Ipi flows in from the second opening 25a, flows from the second passage 25 to the first passage 24, and flows out to the intake passage Ipi from the first opening 24a.

Accordingly, in the region Ap facing the detection part (pressure receiving chamber Rc) of the pressure sensor 30 and the region At facing the detection part 41 of the temperature sensor 40, the occurrence of stagnation in the flow of intake air can be suppressed or prevented. Hence, in the passage (first passage 24 and second passage 25) leading from the detection part (pressure receiving chamber Rc, detection part 41) of the sensor (pressure sensor 30 and temperature sensor 40) to the intake passage Ipi, a flow of intake air can be actively generated, adhesion or freezing of a liquid or liquid-like substance such as fuel, moisture in the intake air, and blow-by gas can be suppressed or prevented, and a state quantity (pressure, temperature) of the intake air can be detected with high accuracy by the sensor (pressure sensor 30 and temperature sensor 40).

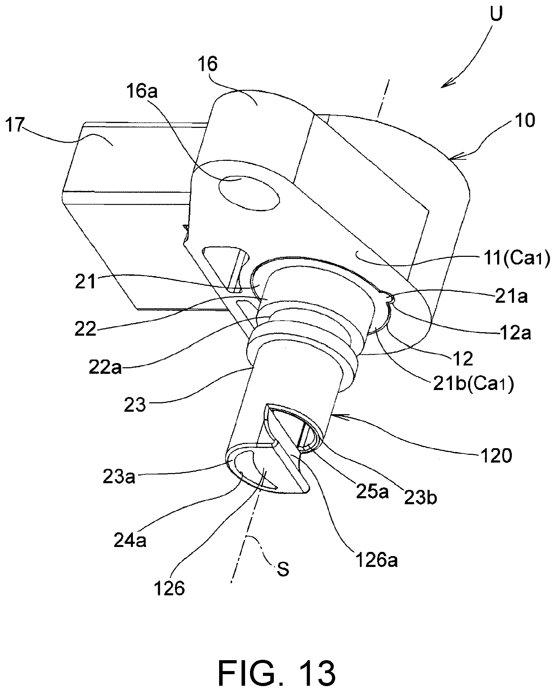

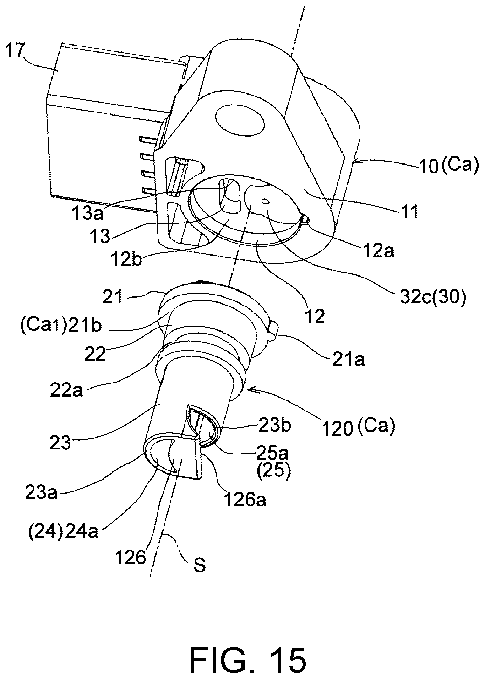

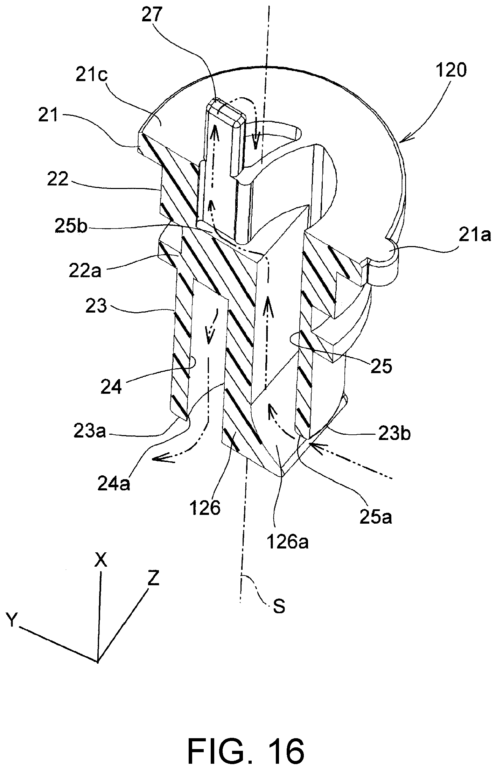

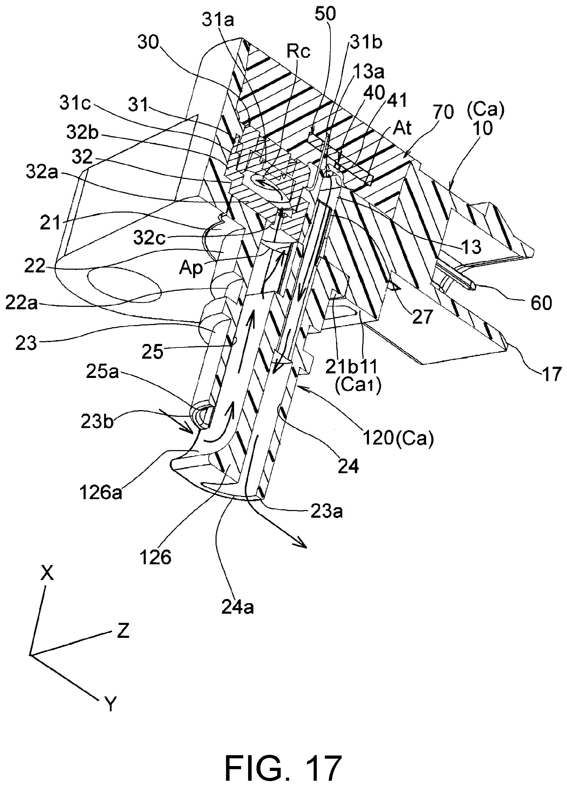

FIG. 13 to FIG. 18 show the sensor unit U according to a second embodiment. The sensor unit U according to the second embodiment has the same configuration as the sensor unit U according to the first embodiment except that the sleeve 20 is changed to a sleeve 120. Thus, the same configurations are denoted by the same reference numerals and the description thereof will be omitted.

The sensor unit U according to the second embodiment includes: the case body 10, and the sleeve 120 extending in the axis S direction, serving as the case Ca; the pressure sensor 30; the temperature sensor 40; the circuit board 50; a plurality of terminals 60; and the mold resin material 70.

The sleeve 120 is molded using a resin material. The sleeve 120 is formed in a cylindrical shape extending in the axis S direction, and includes: the fitting part 21; the large diameter cylindrical part 22; the small diameter cylindrical part 23; the first passage 24; the second passage 25; the partition wall 126, providing a partition between the first passage 24 and the second passage 25; and the protruding wall 27, protruding in the axis S direction from the fitting part 21.

The partition wall 126 extends in the axis S direction and provides a partition between the first passage 24 and the second passage 25. The partition wall 126 is formed to include a collision wall 126a in the vicinity of the second opening 25a on the tip side in the axis S direction.

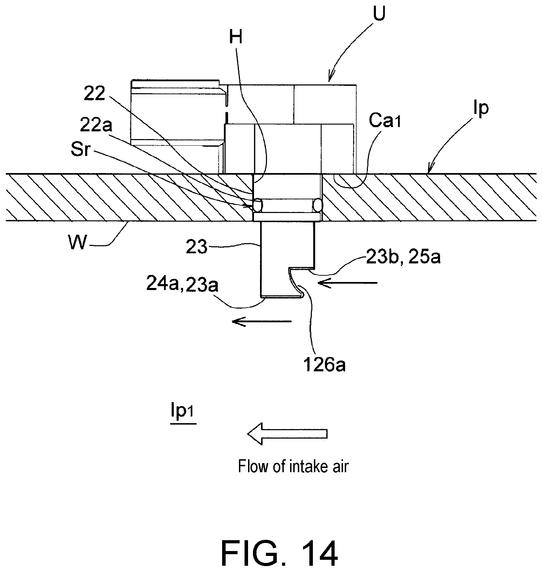

As shown in FIG. 14, the collision wall 126a is arranged toward the upstream side of the intake passage Ipi in order to collide with the intake air flowing through the intake passage Ipi in the state in which the sensor unit U is attached to the intake pipe Ip, and is formed as a curved surface inclined toward the second passage 25. Accordingly, the collision wall 126a functions as a guide part that guides the intake air flowing through the intake pipe Ipi toward the second passage 25.

Here, the collision wall 126a is formed as a curved surface as a whole, but may also be formed to partially include a curved surface.

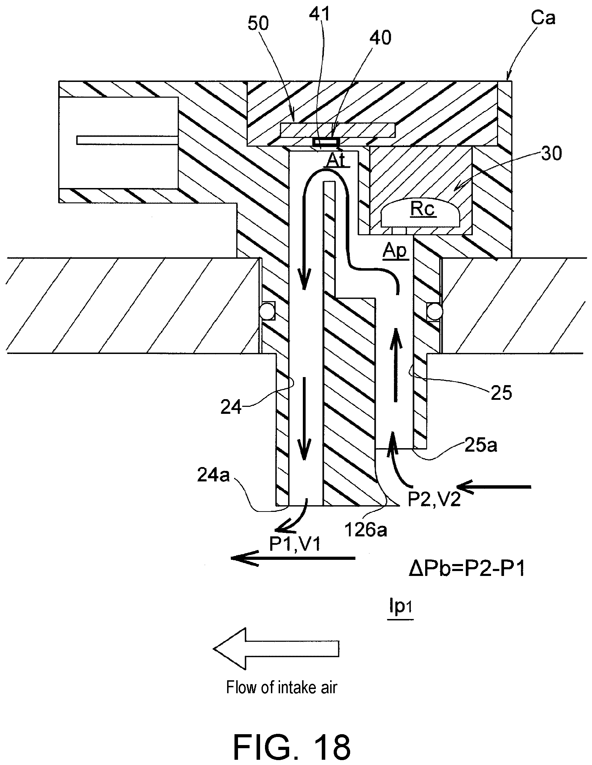

As shown in FIG. 18, when the sensor unit U is attached to the intake pipe Ip with the collision wall 126a facing toward the upstream side of an intake air flow so that the intake air flowing through the intake passage Ipi collides with the collision wall 126a, the amount of intake air flowing into the second passage 25 from the second opening 25a increases compared to the first embodiment shown in FIG. 12.

As a result, a pressure difference ΔPb between the vicinity of the second opening 25a and the vicinity of the first opening 24a becomes larger than the pressure difference ΔPa in the first embodiment. That is, the following relationship is established: ΔPb > ΔPa > ΔPo. Due to the pressure difference ΔPb, the intake air flowing from the intake passage Ipi into the second passage 25 increases compared to the first embodiment.

Accordingly, in the sensor unit U, by generating a flow of intake air in the first passage 24 and the second passage 25, it can be suppressed or prevented that a liquid or liquid-like substance such as fuel, moisture in the intake air, and blow-by gas adheres to the inside of the passage, and freezing of adhered substances or the like can be prevented. Hence, the pressure sensor 30 is able to detect with high accuracy the pressure of the intake air guided to the detection part (pressure receiving chamber Rc), and the temperature sensor 40 is able to detect with high accuracy the temperature of the intake air guided to the detection part 41.

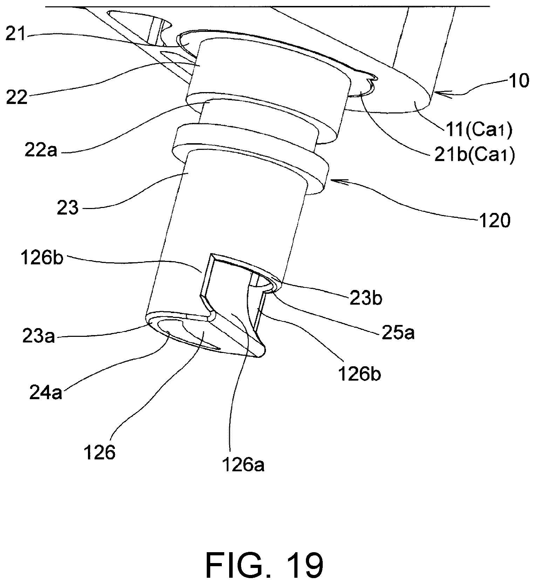

FIG. 19 shows the sensor unit U according to a third embodiment. The sensor unit U according to the third embodiment is obtained by partially changing the sleeve 120 of the sensor unit U according to the second embodiment. The same configurations are denoted by the same reference numerals and the description thereof will be omitted.

In the sleeve 120 of the sensor unit U according to the third embodiment, the partition wall 126 providing a partition between the first passage 24 and the second passage 25 is formed to include side surfaces 126b continuously formed on both sides of a curved surface serving as the collision wall 126a.

The side surface 126b, together with the curved surface of the collision wall 126a, functions as a guide part that guides the intake air flowing through the intake passage Ip₁ toward inside the second passage 25.

According to the third embodiment, after the intake air flowing through the intake passage Ipi collides with the collision wall 126a, a flow rate of the intake air from a peripheral edge of the collision wall 126a toward the downstream side of the intake passage Ip₁ is suppressed by the side surface 126b, and a flow rate of the intake air flowing in toward the second opening 25a increases.

Accordingly, similarly to the above, by generating a flow of intake air in the first passage 24 and the second passage 25, it can be suppressed or prevented that a liquid or liquid-like substance such as fuel, moisture in the intake air, and blow-by gas adheres to the inside of the passage, and freezing of adhered substances or the like can be prevented. Hence, the pressure sensor 30 is able to detect with high accuracy the pressure of the intake air guided to the detection part (pressure receiving chamber Rc), and the temperature sensor 40 is able to detect with high accuracy the temperature of the intake air guided to the detection part 41.

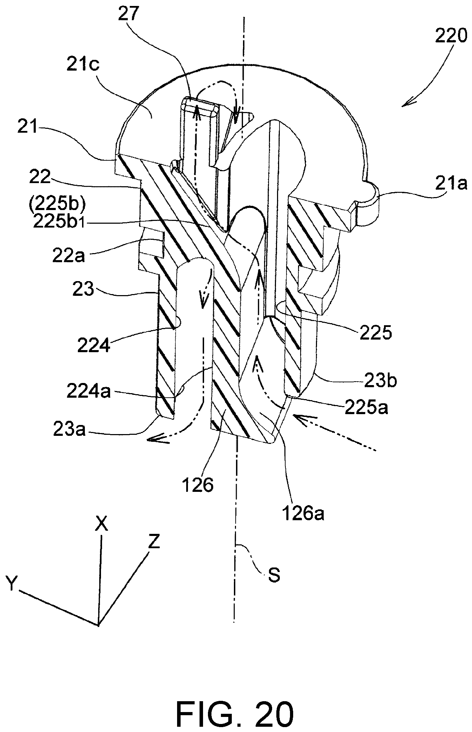

FIG. 20 to FIG. 25 show the sensor unit U according to a fourth embodiment. The sensor unit U according to the fourth embodiment has the same configuration as the sensor unit U according to the second embodiment except that the sleeve 120 is changed to a sleeve 220. Thus, the same configurations are denoted by the same reference numerals and the description thereof will be omitted.

The sensor unit U according to the fourth embodiment includes: the case body 10, and the sleeve 220 extending in the axis S direction, serving as the case Ca; the pressure sensor 30; the temperature sensor 40; the circuit board 50; a plurality of terminals 60; and the mold resin material 70.

The sleeve 220 is molded using a resin material. The sleeve 220 is formed in a cylindrical shape extending in the axis S direction, and includes: the fitting part 21; the large diameter cylindrical part 22; the small diameter cylindrical part 23; a first passage 224; a second passage 225; the partition wall 126, providing a partition between the first passage 224 and the second passage 225; and the protruding wall 27, protruding in the axis S direction from the fitting part 21.

In order to expose a detection part of a sensor to the intake air flowing through the intake passage Ipi, the first passage 224 is formed extending from the region At (recess 13 into which protruding wall 27 is inserted) facing the detection part 41 of the temperature sensor 40 in the axis S direction to a first opening 224a that opens on the first end face 23a.

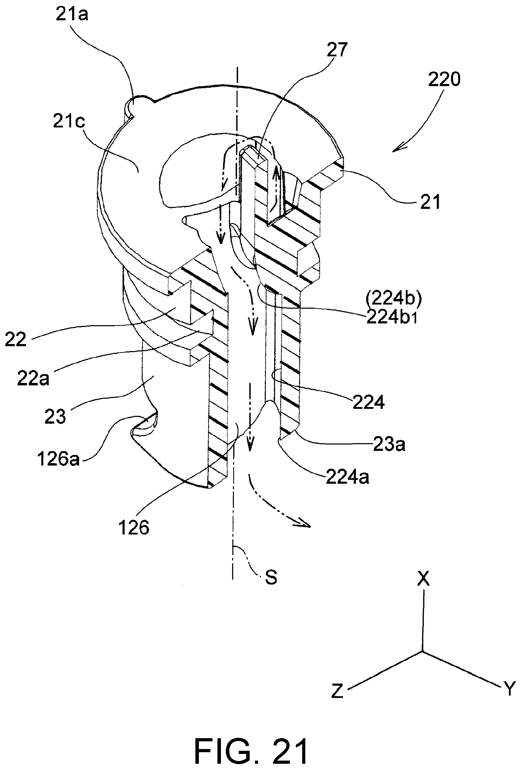

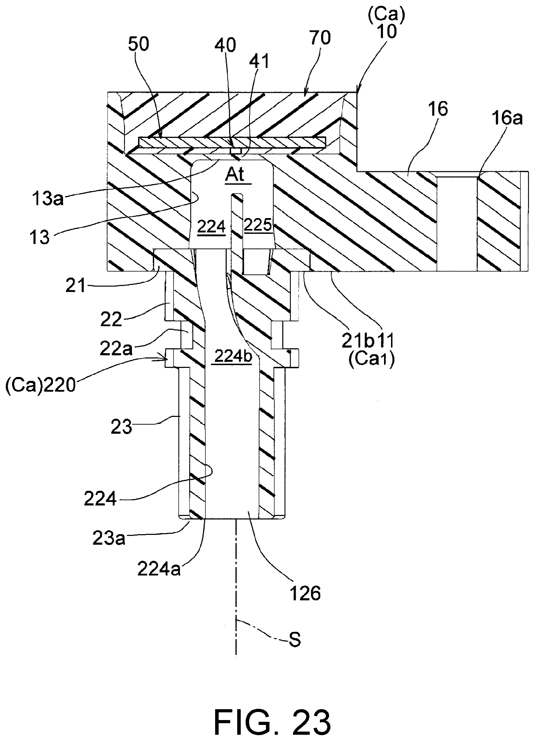

As shown in FIG. 21 and FIG. 23, the first passage 224 includes, in the middle thereof from the region At facing the detection part 41 of the temperature sensor 40 to the first opening 224a, a bent passage 224b defined by a bent inner wall surface 224b₁.

As shown in FIG. 21, the bent passage 224b is two-dimensionally bent within the XY plane, and the inner wall surface 224b₁ thereof is formed curved so as to be continuous in a streamlined manner.

In order to expose a detection part of a sensor to the intake air flowing through the intake passage Ipi, the second passage 225 is formed extending from the region At (recess 13 into which protruding wall 27 is inserted) facing the detection part 41 of the temperature sensor 40 in the axis S direction to a second opening 225a that opens on the second end face 23b.

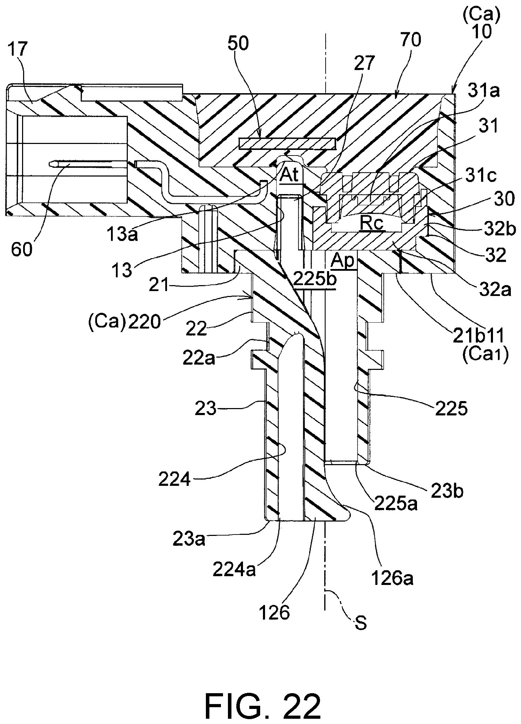

As shown in FIG. 22, the second passage 225 extends linearly along the straight line L in the axis S direction from the second opening 225a to the region Ap facing the detection part (pressure receiving chamber Rc) of the pressure sensor 30. The second passage 225 includes, between the region Ap facing the detection part (pressure receiving chamber Rc) of the pressure sensor 30 and the region At facing the detection part 41 of the temperature sensor 40, a bent passage 225b defined by a bent inner wall surface 225bi.

As shown in FIG. 20, the bent passage 225b is two-dimensionally bent within the XZ plane, and the inner wall surface 225b₁ thereof is formed curved so as to be continuous in a streamlined manner.

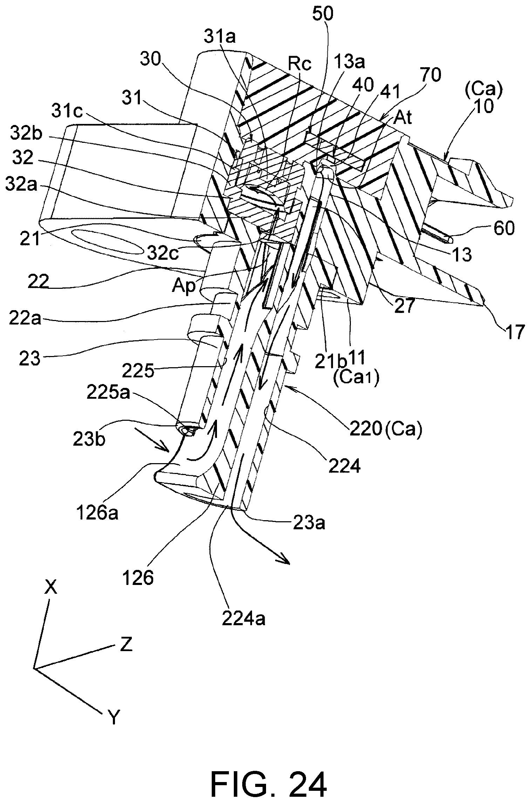

That is, the first passage 224 and the second passage 225 communicate with each other in the region At facing the detection part 41 of the temperature sensor 40 and each open to the intake passage Ipi. As shown in FIG. 24, the first passage 224 and the second passage 225 are formed to include, in a range from the region Ap facing the detection part (pressure receiving chamber Rc) of the pressure sensor 30 through the region At facing the detection part 41 of the temperature sensor 40 to a region in the middle of the first passage 224, the bent passages 224b and 225b that are formed by being three-dimensionally bent.

In this way, by including the bent passages 224b and 225b that are three-dimensionally bent, two passages (first passage 224 and second passage 225) can be arranged in an integrated manner toward the center compared to a case where the two passages as the first passage and the second passage are formed simply as two-dimensionally bent passages, and the sleeve 220 can be reduced in diameter and size.

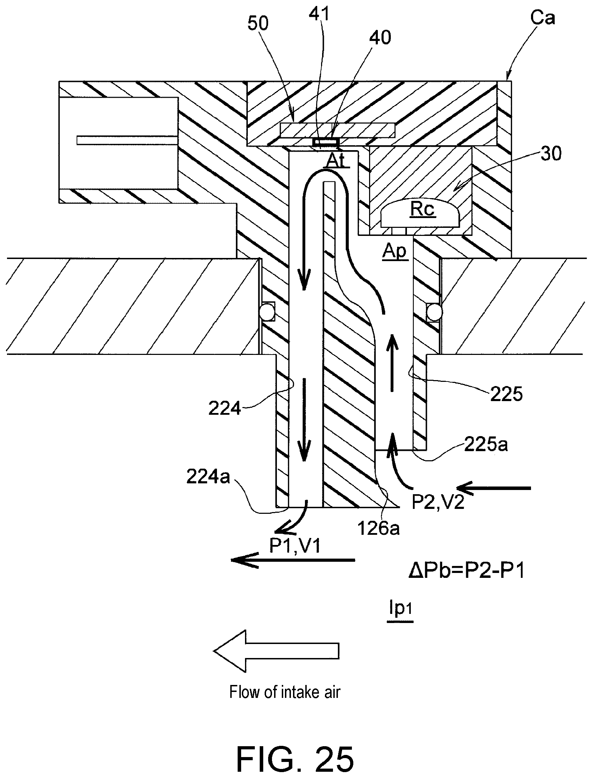

In particular, since the inner wall surfaces 224b₁ and 225b₁ of the bent passages 224b and 225b are formed curved so as to be continuous in a streamlined manner, as shown in FIG. 24 and FIG. 25, the intake air may flow in a streamlined manner. As a result, the passage resistance can be reduced, and the flow rate of the intake air flowing through the first passage 224 and the second passage 225 can be increased.

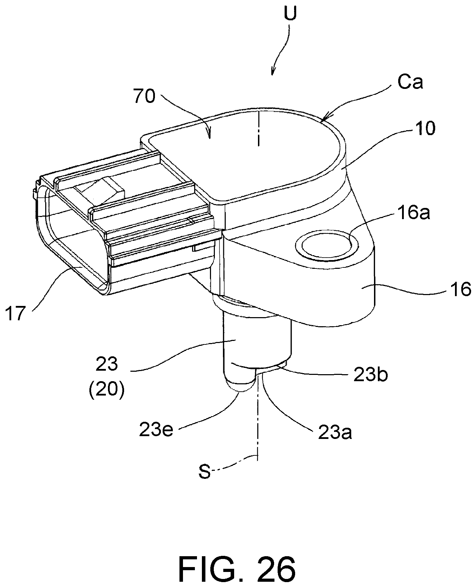

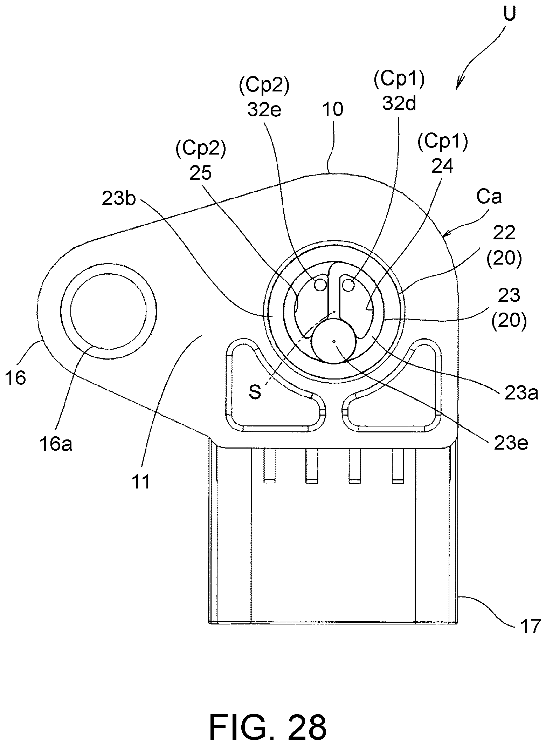

FIG. 26 to FIG. 40 show the sensor unit U according to a fifth embodiment. The sensor unit U includes the case Ca, the pressure sensor 30, the temperature sensor 40, the circuit board 50, a plurality of terminals 60, the mold resin material 70, and the annular seal member Sr.

The case Ca is molded using a resin material. The case Ca includes the case body 10, the sleeve 20 of a cylindrical shape, the first accommodation part 14, a second accommodation part 18, the third accommodation part 15, the first passage 24, the second passage 25, the annular groove 22a, and the connector 17.

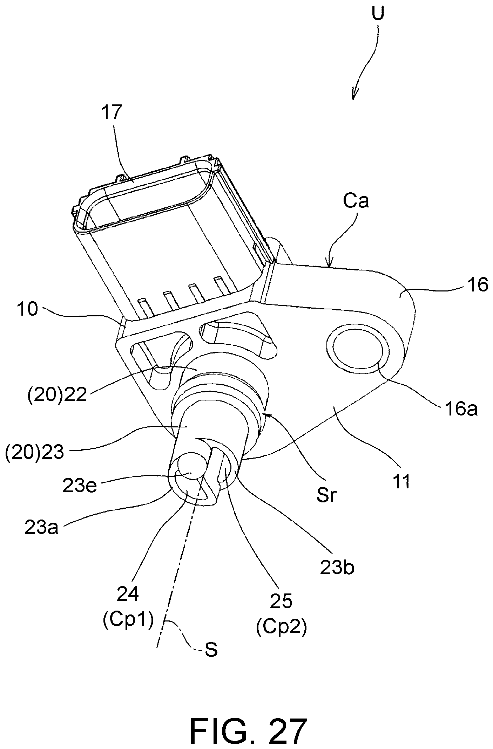

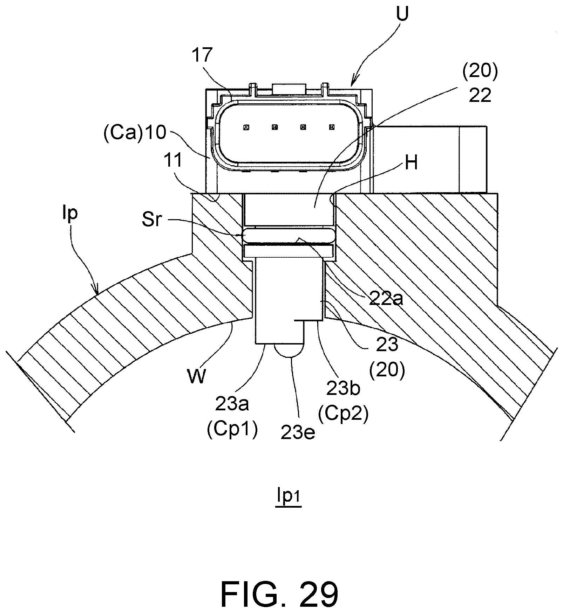

As shown in FIG. 27 and FIG. 29, the case body 10 includes: the flat joint surface 11, joined to the outer wall of the intake pipe Ip; and the flange 16, including a circular hole 16a through which the fastening screw (not shown) that is screwed into the screw hole of the intake pipe Ip passes.

The sleeve 20 is formed in a two-step cylindrical shape extending in the axis S direction perpendicular to the joint surface 11 of the case body 10. That is, the sleeve 20 is formed to include: the large diameter cylindrical part 22; the small diameter cylindrical part 23 continuous with the large diameter cylindrical part 22; the first end face 23a; the second end face 23b; and a tip outer wall 23e.

The large diameter cylindrical part 22 is a region that is fitted into the fitting hole H of the intake pipe Ip. The large diameter cylindrical part 22 has in the outer periphery thereof the annular groove 22a formed into which the annular seal member Sr is fitted.

The small diameter cylindrical part 23 is a region arranged so that a portion thereof protrudes into the intake passage Ipi while the small diameter cylindrical part 23 is joined to the intake pipe Ip.

The first end face 23a defines an opening end where the first passage 24 opens to the intake passage Ipi.

The second end face 23b defines, at a position away from the first end face 23a in the axis S direction, that is, a position in close proximity to the inner wall surface W of the intake pipe Ip, an opening end where the second passage 25 opens to the intake passage Ipi.

The tip outer wall 23e is formed in a hemispherical shape protruding in the axis S direction from the first end face 23a and defines an outer wall of the second accommodation part 18.

As shown in FIG. 29, while the sensor unit U is assembled to the intake pipe Ip, the large diameter cylindrical part 22 is fitted into the fitting hole H of the intake pipe Ip, and the small diameter cylindrical part 23 partially protrudes into the intake passage Ipi of the intake pipe Ip. That is, the second end face 23b is arranged in close proximity to the inner wall surface W, and a region including the first end face 23a and the tip outer wall 23e is arranged protruding from the inner wall surface W into the intake passage Ipi.

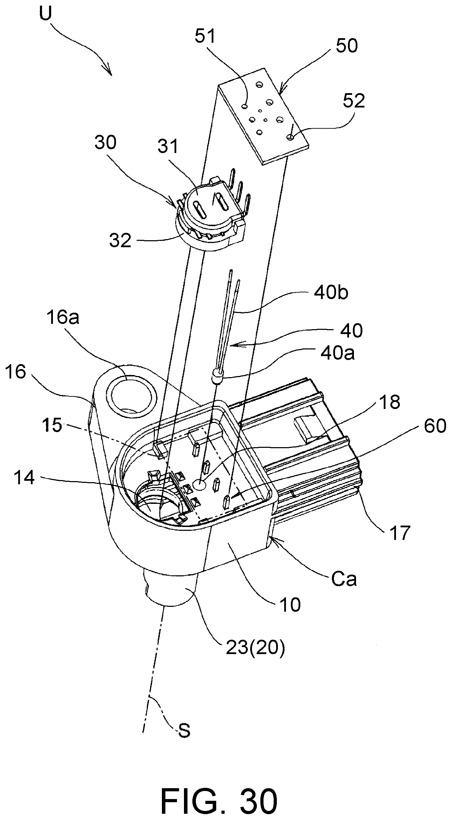

As shown in FIG. 30 and FIG. 32 to FIG. 34, the first accommodation part 14 is a region that accommodates and holds the pressure sensor 30, and is formed in an inside region of the case body 10.

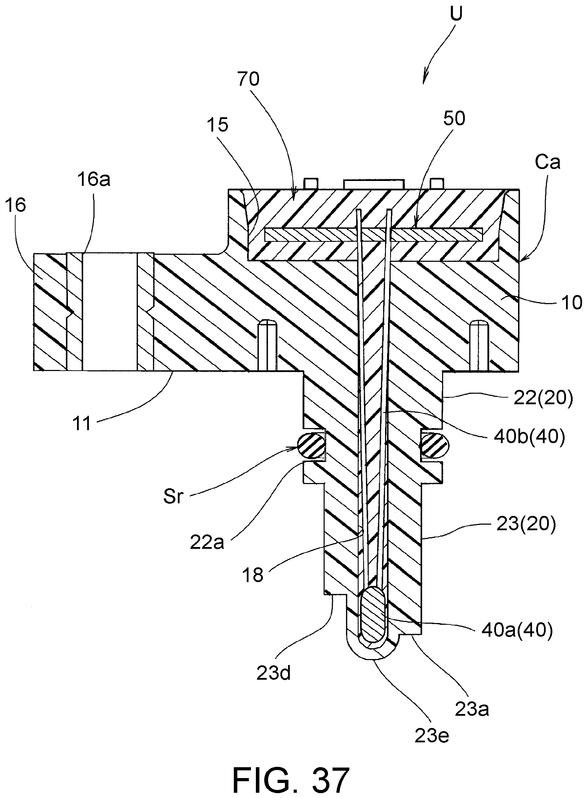

As shown in FIG. 37, the second accommodation part 18 is a region that accommodates the temperature sensor 40. The second accommodation part 18 is formed in a region obtained by extending an inside region of the sleeve 20 from the inside region of the case body 10 to the inside of the tip outer wall 23e.

As shown in FIG. 30, the third accommodation part 15 is a region that accommodates and holds the circuit board 50, and is formed in the inside region of the case body 10.

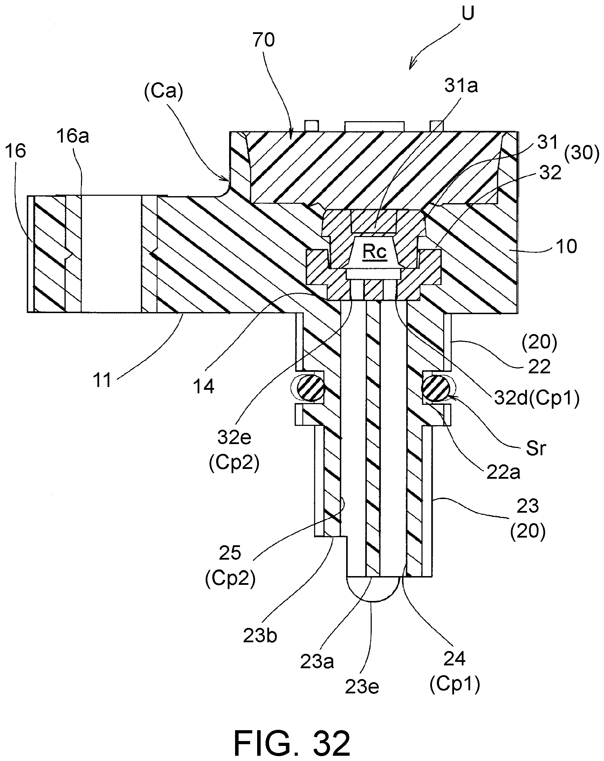

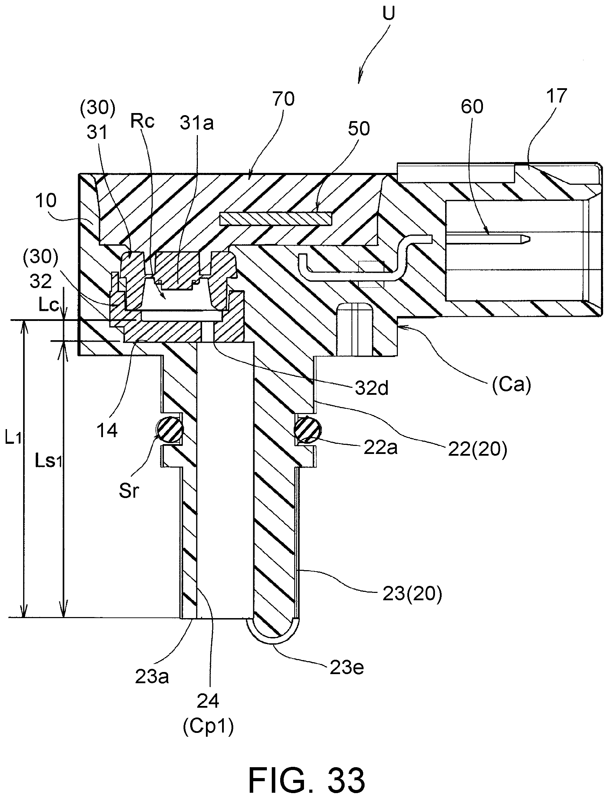

As shown in FIG. 32 and FIG. 33, on the inside of the sleeve 20, the first passage 24 is formed to extend linearly in the axis S direction from the first end face 23a of the sleeve 20 to the first accommodation part 14 of the case body 10, having a first passage length Ls₁ and constant passage area. An open end on a deep side of the first passage 24 communicates with a first ventilation hole 32d formed in the sensor cover 32 of the pressure sensor 30.

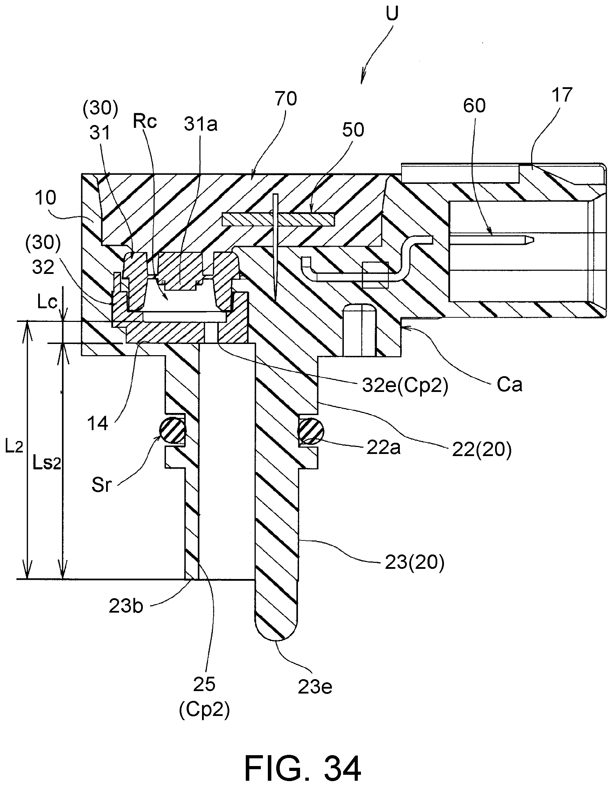

As shown in FIG. 32 and FIG. 34, on the inside of the sleeve 20, the second passage 25 is formed to extend linearly in the axis S direction and adjacent to the first passage 24 from the second end face 23b to the first accommodation part 14 of the case body 10, having a second passage length Ls₂ (Ls₂ < Lsi) shorter than the first passage length Ls₁ and constant passage area. An opening end on a deep side of the second passage 25 leads to a second ventilation hole 32e formed in the sensor cover 32 of the pressure sensor 30.

Here, the first passage 24 and the second passage 25 are formed to have the same passage area but different passage lengths (first passage length Ls₁ > second passage length Ls₂). For example, the first passage length Ls₁ of the first passage 24 is 1.2 to 1.3 times the second passage length Ls₂ of the second passage 25.

The first passage 24 is formed to communicate the pressure receiving chamber Rc of the pressure sensor 30 with the intake passage Ipi of the intake pipe Ip through the first ventilation hole 32d. The second passage 25 is formed to communicate the pressure receiving chamber Rc of the pressure sensor 30 with the intake passage Ipi of the intake pipe Ip through the second ventilation hole 32e.

As shown in FIG. 29, FIG. 31, and FIG. 32, in a region of the large diameter cylindrical part 22 of the sleeve 20 of the case Ca, the annular groove 22a is formed by hollowing out an outer periphery in an annular shape for the annular seal member Sr to be fitted therein.

As shown in FIG. 33 and FIG. 34, the connector 17 protrudes in a direction perpendicular to the axis S from the case body 10, and is formed to expose and surround a plurality of (here, four) terminals 60 connected to the circuit board 50 and to be connected to the outside.

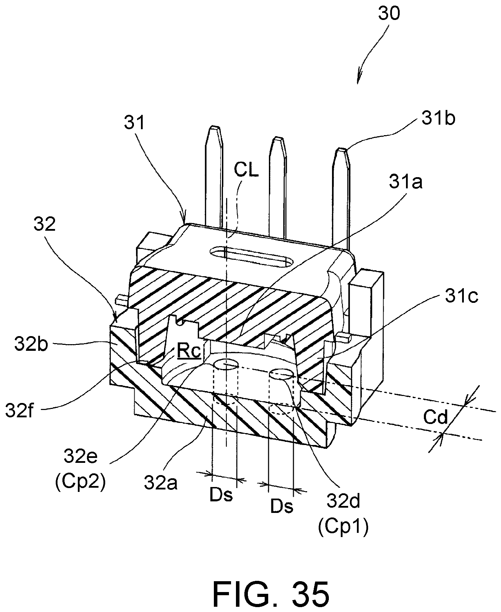

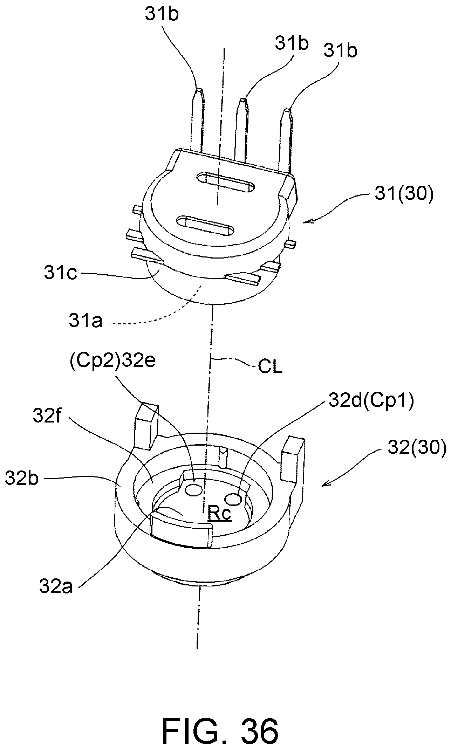

As shown in FIG. 35 and FIG. 36, the pressure sensor 30 is composed of the sensor body 31 and the sensor cover 32.

The sensor body 31 includes, for example: a pressure receiving part 31a, such as a diaphragm including a semiconductor strain gauge; a lead wire 31b, extending from the pressure receiving part 31a; and an annular part 31c, surrounding the pressure receiving part 31a.

The sensor cover 32 includes the bottom 32a of a disk shape, an annular step part 32f, an annular outer wall 32b, the first ventilation hole 32d, and the second ventilation hole 32e. In order to function as a protective cover that covers the pressure receiving part 31a and to define the pressure receiving chamber Rc, the sensor cover 32 has the annular part 31c fitted into the annular outer wall 32b and is connected to the sensor body 31.

The pressure sensor 30 outputs, as an electrical signal, a change in electrical resistance according to the amount of deformation in the pressure receiving part 31a due to a pressure of the intake air guided into the pressure receiving chamber Rc through the first ventilation hole 32d and the second ventilation hole 32e.

While the sensor unit U is assembled to the intake pipe Ip, the pressure sensor 30 may detect a pressure of the intake air flowing through the intake passage Ipi downstream of the throttle device M.

Here, as shown in FIG. 33 and FIG. 35, the first ventilation hole 32d has a passage length Lc corresponding to a wall thickness of the bottom 32a. The first ventilation hole 32d constitutes a circular hole having opening area (inner diameter Ds) sufficiently smaller than the passage area of the first passage 24, and is formed to lead to the first passage 24.

As shown in FIG. 34 and FIG. 35, the second ventilation hole 32e has the passage length Lc corresponding to the wall thickness of the bottom 32a. The second ventilation hole 32e constitutes a circular hole having the opening area (inner diameter Ds) sufficiently smaller than passage area of the second passage 25 and the same as the opening area of the first ventilation hole 32d, and is formed to lead to the second passage 25.

According to the above configuration, a communication path that communicates the pressure receiving chamber Rc of the pressure sensor 30 with the intake passage Ipi of the intake pipe Ip is formed to include: a first communication path Cp1, having a predetermined passage length Li (= Ls₁ + Lc) so as to open in a region away from the inner wall surface W of the intake pipe Ip toward a central side; and a second communication path Cp2, having a passage length L₂ (= Ls₂ + Lc) shorter than the passage length Li of the first communication path Cp1 so as to open in a region in close proximity to the inner wall surface W of the intake pipe Ip.

Specifically, the first communication path Cp1 is formed to include: the first passage 24, having predetermined passage area and the first passage length Lsi; and the first ventilation hole 32d, leading to the first passage 24 and having the opening area smaller than the passage area of the first passage 24. The second communication path Cp2 is formed to include: the second passage 25, having the same passage area as the first passage 24 and the second passage length Lsz shorter than the first passage length Lsi; and the second ventilation hole 32e, leading to the second passage 25 and having the opening area smaller than the passage area of the second passage 25.

Here, the first communication path Cp1 is formed with the predetermined passage length Li so as to open in the region away from the inner wall surface W of the intake pipe Ip toward the central side. The second communication path Cp2 is formed with the passage length L₂ shorter than the passage length Li of the first communication path Cp1 so as to open in the region in close proximity to the inner wall surface W of the intake pipe Ip.

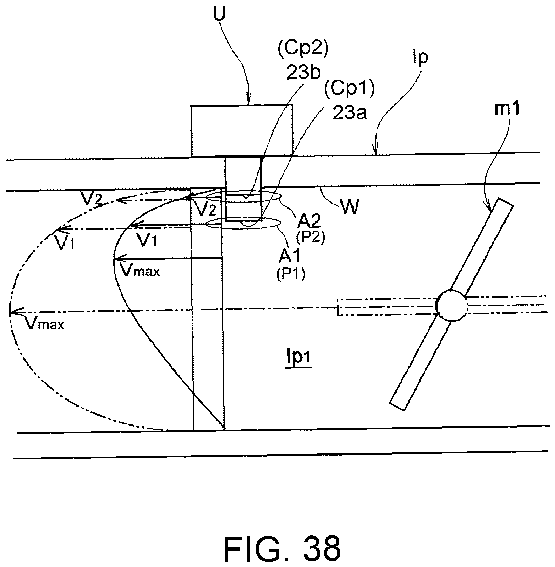

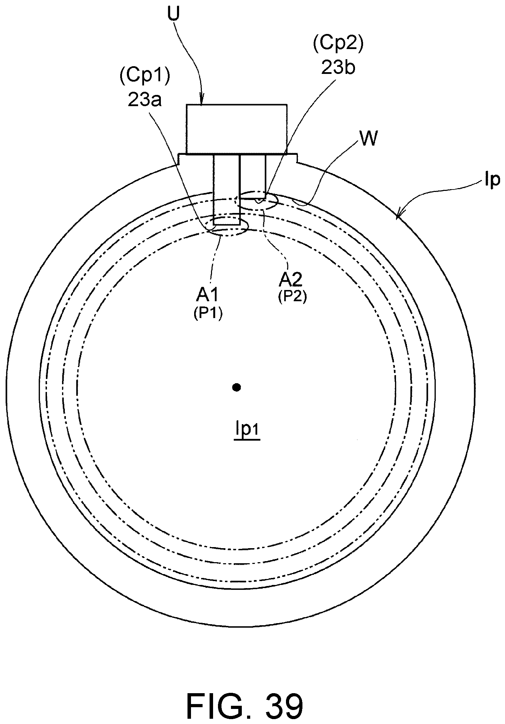

In a state in which the sensor unit U is arranged downstream of the throttle device M (throttle valve m1) with respect to the intake pipe Ip, as shown in FIG. 38 and FIG. 39, a flow of intake air in the intake passage Ip₁ is a flow in which a maximum flow velocity (Vₘₐₓ) occurs in a region offset toward the inner wall surface W side from a central region in an opening degree range in which the throttle valve m1 has a small opening degree, as shown by a solid line. On the other hand, when the throttle valve m1 is fully opened, as shown by a two-dot chain line, the flow of intake air is a flow in which the maximum flow velocity (Vₘₐₓ) occurs in the central region, as in the case of a general straight pipe passage.

In the intake air flowing through the intake passage Ipi, for an inviscid and incompressible fluid in the case of not being ultrafast, Bernoulli's law that "kinetic energy + pressure energy + potential energy = constant" can be approximately used.

Specifically, when the density of the fluid is ρ (kg/m³), the flow velocity is V (m/s), the pressure is P (pa), the gravitational acceleration is g (m/s²), and the height position is Z, the following expression is achieved: ρV²/2 + P + ρgZ = constant. In the flow of intake air in the intake pipe Ip, since potential energy can be ignored, the following approximation is possible: ρV²/2 + P = constant.

That is, in the intake passage Ipi, the following relationships are established: as the flow velocity V increases (faster), the pressure P decreases (lower); as the flow velocity V decreases (slower), the pressure P increases (higher).

Accordingly, the first communication path Cp1 is arranged to open in a first region A1 where the flow of intake air is fast (at velocity Vi) in the intake passage Ipi, and the second communication path Cp2 is arranged to open in a second region A2 where the flow of intake air is slower (at velocity V₂) than that in the first region A1 in the intake passage Ip₁. Thereby, between a pressure P1 at an opening end (first end face 23a) of the first communication path Cp1 and a pressure P2 (> P1) at an opening end (second end face 23b) of the second communication path Cp2, a pressure difference ΔP (= P2 - P1 = (V₁² - V₂²)/2) can be generated.

Due to this pressure difference ΔP, with the pressure receiving chamber Rc as the starting point, a trigger flow is generated that is drawn out from the first communication path Cp1 into the intake passage Ipi, and a follow-up flow is accordingly generated that flows from the intake passage Ipi through the second communication path Cp2 into the pressure receiving chamber Rc.

Accordingly, in the sensor unit U, by generating a flow of intake air in the communication path (first communication path Cp1 and second communication path Cp2), it can be suppressed or prevented that a liquid or liquid-like substance such as fuel, moisture in the intake air, and blow-by gas adheres to the inside of the communication path, and freezing of adhered substances or the like can be prevented. Hence, the pressure sensor 30 is able to detect with high accuracy the pressure of the intake air guided to the pressure receiving chamber Rc.

On the other hand, regarding passage resistance (pressure loss) of the communication path, when pressure loss of a passage is Δp (Pa), a friction coefficient of the passage is λ (dimensionless), a passage length is L (m), an inner diameter of the passage is D (m), fluid density is ρ (kg/m³) and flow velocity is V (m/s), the following expression is achieved: Δp = λLρV²/2D. That is, the pressure loss Δp is inversely proportional to the inner diameter D of the passage and proportional to the passage length L. As the passage length L increases, the pressure loss Δp increases.

Here, since a relationship between the first passage length Ls₁ of the first passage 24 and the second passage length Ls₂ of the second passage 25 is Ls₁ > Ls₂, pressure loss Δp₁ of the first passage 24 is larger than pressure loss Δp₂ of the second passage 25 (Δp₁ > Δp₂).

That is, when only the first passage 24 and the second passage 25 are compared, the first communication path Cp1 has a passage form in which the passage resistance is greater than that of the second communication path Cp2.

However, in this communication path, the pressure difference ΔP between the first communication path Cp1 and the second communication path Cp2 can be ensured to the extent that the passage resistance can be ignored. Hence, as described above, a flow of intake air can be generated in the communication path (first communication path Cp1 and second communication path Cp2), adhesion of a liquid or liquid-like substance such as fuel, moisture in the intake air, and blow-by gas to the inside of the communication path can be suppressed or prevented, freezing of adhered substances or the like can be prevented, and the pressure sensor 30 is able to detect with high accuracy the pressure of the intake air guided to the pressure receiving chamber Rc.

Here, the first communication path Cp1 and the second communication path Cp2 are formed adjacent to each other and open at different positions with respect to the intake passage Ipi. That is, the first passage 24 opens on the first end face 23a arranged in the first region A1 where the flow of intake air is fast, and the second passage 25 opens on the second end face 23b arranged in the second region A2 where the flow of intake air is slower than that in the first region A1. While the first end face 23a and the second end face 23b are separated from each other in the axis S direction, they open in regions in close proximity to each other in terms of regions in the intake passage Ipi.

Accordingly, by simply appropriately setting the position of the opening end (first end face 23a) of the first communication path Cp1 and the position of the opening end (second end face 23b) of the second communication path Cp2, the pressure difference ΔP can be appropriately adjusted, and a flow rate of the intake air flowing through the communication path (first communication path Cp1 and second communication path Cp2) can be easily adjusted.

Since the first ventilation hole 32d and the second ventilation hole 32e are formed to have opening area smaller than the passage area of the first passage 24 and the second passage 25, the first ventilation hole 32d and the second ventilation hole 32e act (trap function) to prevent foreign matter or the like mixed in with the intake air from entering the pressure receiving chamber Rc.

In particular, as shown in FIG. 35, the first ventilation hole 32d and the second ventilation hole 32e are formed offset by a distance Cd in a side part outside a central region including a center line CL of the pressure receiving chamber Rc.

Accordingly, even if foreign matter or the like enters the pressure receiving chamber Rc through the first ventilation hole 32d and the second ventilation hole 32e, it is possible to prevent the foreign matter or the like from directly colliding with the pressure receiving part 31a, the influence of pressure due to impact from the foreign matter or the like or dynamic pressure according to flow velocity of intake air can be suppressed or prevented, and the pressure can be detected with high accuracy.

Since the first ventilation hole 32d and the second ventilation hole 32e are formed as circular holes, machining is easy in comparison with the case of irregularly shaped holes.

When the case Ca is molded from a resin material using a die, the pressure sensor 30 having the above configuration is arranged in the die and molded integrally so as to be accommodated in the first accommodation part 14 of the case body 10. The pressure sensor 30 has the lead wire 31b electrically connected to the circuit board 50, and then is covered and sealed with the mold resin material 70.

The pressure sensor 30 may, in a later process, be fitted into the first accommodation part 14 of the case Ca that has been molded in advance from a resin material, and be sealed with the mold resin material 70.

As shown in FIG. 30, FIG. 31, and FIG. 37, the temperature sensor 40 is a reed-type sensor, and is composed of, for example, a temperature sensing element 40a such as a thermistor, and a lead wire 40b extending from the temperature sensing element 40a. That is, the temperature sensor 40 is inserted into the second accommodation part 18 of the case Ca, has the temperature sensing element 40a arranged in an inside region of the tip outer wall 23e of the sleeve 20, has the lead wire 40b electrically connected to the circuit board 50, and is then covered and sealed with the mold resin material 70.

While the sensor unit U is assembled to the intake pipe Ip, the temperature sensor 40 may detect a temperature of the intake air flowing through the intake passage Ipi downstream of the throttle device M.

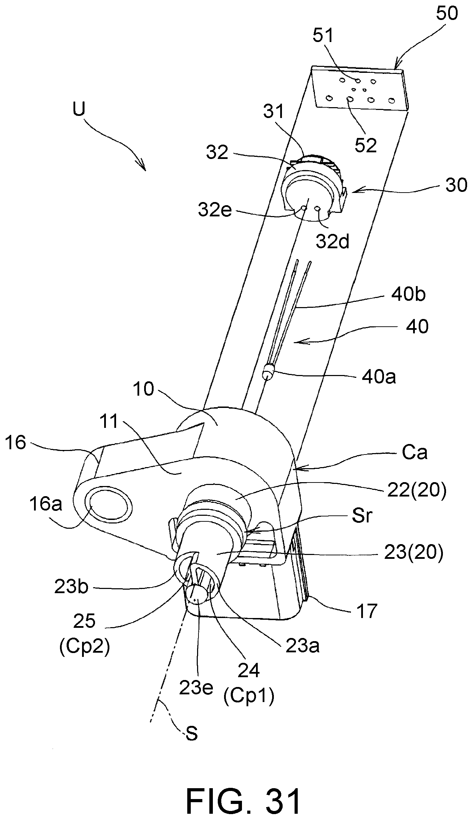

The circuit board 50 has printed wiring and various electronic components (not shown) mounted on its surface. As shown in FIG. 30 and FIG. 31, the circuit board 50 includes three through holes 51 to which the lead wire 31b of the pressure sensor 30 is electrically connected, and four through holes 52 to which the lead wire 40b of the temperature sensor 40 is electrically connected.

During assembly, the circuit board 50 is arranged in the third accommodation part 15 of the case body 10, has the lead wires 31b and 40b electrically connected thereto, and is then covered and sealed with the mold resin material 70.

The terminal 60 is made of a conductive metal material. As shown in FIG. 33 and FIG. 34, the terminal 60 is embedded in the case body 10, has one end connected to the through hole 52 of the circuit board 50, and is arranged to have its free end side exposed inside the connector 17 and surrounded by the connector 17.

The mold resin material 70 is a sealing material such as epoxy resin. With the pressure sensor 30, the temperature sensor 40, and the circuit board 50 accommodated and held in the first accommodation part 14, the second accommodation part 18, and the third accommodation part 15 of the case Ca, respectively, the mold resin material 70 is injected into the case Ca to fill gaps and spaces and is solidified.

Accordingly, as shown in FIG. 32, FIG. 33, FIG. 34, and FIG. 37, the first accommodation part 14, the second accommodation part 18, and the third accommodation part 15, with the pressure sensor 30, the temperature sensor 40, and the circuit board 50 respectively arranged therein, are sealed by filling the mold resin material 70.

The annular seal member Sr is made of a rubber material excellent in heat resistance, swelling resistance and so on. As shown in FIG. 32 to FIG. 34, the annular seal member Sr is formed in an annular shape, and is fitted into the annular groove 22a formed on the outer periphery of the sleeve 20 of the case Ca.

As shown in FIG. 29, the annular seal member Sr seals between the fitting hole H of the intake pipe Ip and the sleeve 20 while the sensor unit U is assembled to the intake pipe Ip.

Next, in the internal combustion engine E equipped with the sensor unit U, a detection operation of the sensor unit U will be described.

First, when the internal combustion engine E is in an idle operating range, the throttle valve m1 has closed the intake passage Ipi. The intake air flowing through the intake passage Ipi flows through the bypass passage m2 so as to bypass the throttle valve m1, and then flows out again to the intake passage Ipi on the downstream side.

On the other hand, when the internal combustion engine E is in an operating range other than the idle operating range, the throttle valve m1 is in a predetermined opening degree range and has opened the intake passage Ipi.

Accordingly, the intake air flowing through the intake passage Ipi flows through the intake passage Ipi and is drawn into the internal combustion engine E, without passing through the bypass passage m2.

In an operating state of the internal combustion engine E, a pressure and a temperature, which are state quantities of the intake air, are detected by the sensor unit U downstream of the throttle device M.

That is, the temperature of the intake air is detected by the temperature sensor 40. Specifically, since the temperature sensing element 40a is arranged in the vicinity of the inside of the tip outer wall 23e protruding from the first end face 23a of the sleeve 20, the temperature of the intake air flowing through the intake passage Ipi is detected in a region away from a wall surface of the intake pipe Ip. Accordingly, the influence of the temperature of the wall surface of the intake pipe Ip can be suppressed.

By the pressure sensor 30, the pressure of the intake air flowing through the intake passage Ip₁ through the first communication path Cp1 including the first passage 24 and the first ventilation hole 32d and the second communication path Cp2 including the second passage 25 and the second ventilation hole 32e is detected.

Specifically, when comparing the ease of flow between the first communication path Cp1 and the second communication path Cp2, since the first communication path Cp1 is arranged in the first region A1 where the flow of intake air is fast, and the second communication path Cp2 is arranged in the second region A2 where the flow of intake air is slower than that in the first region A1, the intake air in the pressure receiving chamber Rc is more likely to be drawn out through the first communication path Cp1 than through the second communication path Cp2.

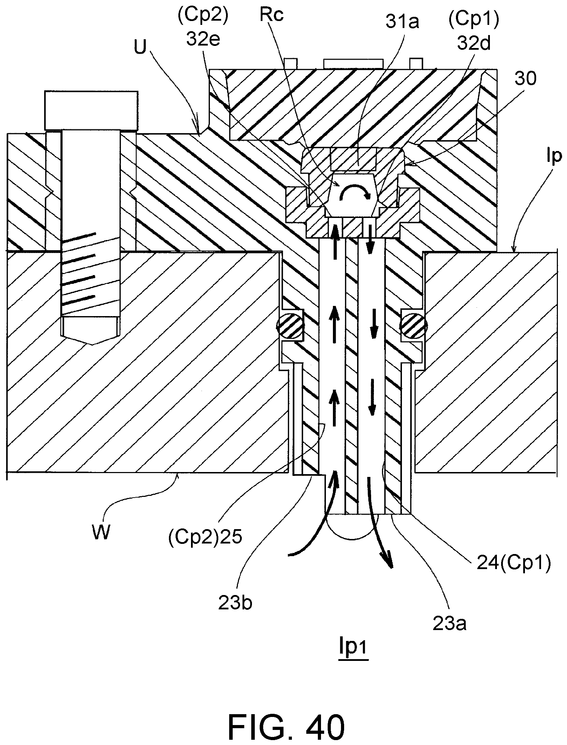

Accordingly, as shown in FIG. 40, the intake air in the pressure receiving chamber Rc is drawn out to the intake passage Ip₁ through the first communication path Cp1. In conjunction with this flow of intake air, the intake air in the intake passage Ip₁ flows into the pressure receiving chamber Rc through the second communication path Cp2.

By continuous execution of this flow, the intake air is supplied into the pressure receiving chamber Rc, and the pressure of the intake air is detected by the pressure receiving part 31a. By this flow of intake air, it can be suppressed or prevented that a liquid or liquid-like substance such as fuel, moisture in the intake air, and blow-by gas adheres to an inner wall surface of the first communication path Cp1 and the second communication path Cp2. Hence, freezing of the liquid or liquid-like substance can be suppressed or prevented. By the first ventilation hole 32d and the second ventilation hole 32e, foreign matter or the like can be prevented from entering the pressure receiving chamber Rc.

In this way, the pressure of the intake air is detected by the pressure sensor 30, the temperature of the intake air is detected by the temperature sensor 40, the respectively detected information is incorporated as ECU control information, and the internal combustion engine E is appropriately controlled.

As described above, the sensor unit U is configured to include: the pressure sensor 30, detecting the pressure of the intake air in the intake pipe Ip; and the case Ca, including the first accommodation part 14 and a communication path, the first accommodation part 14 accommodating the pressure sensor 30, the communication path communicating the pressure receiving chamber Rc of the pressure sensor 20 with the intake passage Ipi of the intake pipe Ip. The communication path is configured to include: the first communication path Cp1, arranged to open in the first region A1 where the flow of intake air is fast in the intake passage Ipi; and the second communication path Cp2, arranged to open in the second region A2 where the flow of intake air is slower than that in the first region A1 in the intake passage Ipi.

According to this, since a pressure difference occurs between the opening end of the first communication path Cp1 and the opening end of the second communication path Cp2, and a trigger flow is generated in the first communication path Cp1, a flow is also generated in the second communication path Cp2 in conjunction with that flow. Thus, a flow can be generated in the whole communication path.

Accordingly, in the regions of the first communication path Cp1, the pressure receiving chamber Rc, and the second communication path Cp2, the occurrence of stagnation in the flow of intake air can be suppressed or prevented.

Hence, with respect to the pressure receiving chamber Rc, the intake air in the intake passage Ipi can be constantly supplied, entry of foreign matter can be suppressed or prevented, adhesion or freezing of a liquid or liquid-like substance such as fuel, moisture in the intake air, and blow-by gas can be suppressed or prevented, and the pressure of the intake air can be detected with high accuracy by the pressure receiving part 31a.

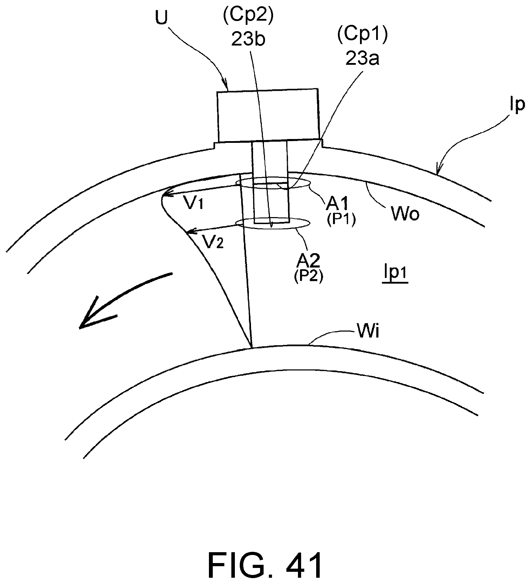

In the above embodiment, a case is shown where the intake pipe Ip is a straight pipe that defines the linear intake passage Ipi. However, the present disclosure is not limited thereto. For example, as shown in FIG. 41, the intake pipe Ip may be a bent pipe that defines the curved intake passage Ipi.

In this embodiment, a flow velocity distribution of the intake air flowing through the intake passage Ipi is that the flow is fast on an inner wall surface Wo side on the outer side and is slow on an inner wall surface Wi side on the inner side.

Accordingly, the first communication path Cp1 is arranged to open in the first region A1 on the outer side where the flow of intake air is fast in the intake passage Ipi, and the second communication path Cp2 is arranged to open in the second region A2 where the flow of intake air is slower than that in the first region A1 in the intake passage Ipi.

That is, the first communication path Cp1 has a short passage length so as to open in a region in close proximity to the inner wall surface Wo of the intake pipe Ip. The second communication path Cp2 has a passage length longer than that of the first communication path Cp1 so as to open in a region away from the inner wall surface Wo of the intake pipe Ip toward the central side.

In this case, similarly to the above, since a pressure difference occurs between the opening end of the first communication path Cp1 and the opening end of the second communication path Cp2, and a trigger flow is generated in the first communication path Cp1, a flow is also generated in the second communication path Cp2 in conjunction with that flow. Thus, a flow can be generated in the whole communication path.

In the above embodiment, as the first ventilation hole and the second ventilation hole, the first ventilation hole 32d and the second ventilation hole 32e formed in the sensor cover 22 are shown. However, the present disclosure is not limited thereto. A first ventilation hole and a second ventilation hole formed within a sleeve of a case may be adopted.

For example, the first ventilation hole may be provided at a position that divides the first passage in half, and the second ventilation hole may be provided at a position that divides the second passage in half.

As the first ventilation hole and the second ventilation hole, the first ventilation hole 32d and the second ventilation hole 32e being circular holes are shown. However, the present disclosure is not limited thereto. A first ventilation hole and a second ventilation hole having the same opening area and being in a form other than circular holes may be adopted.

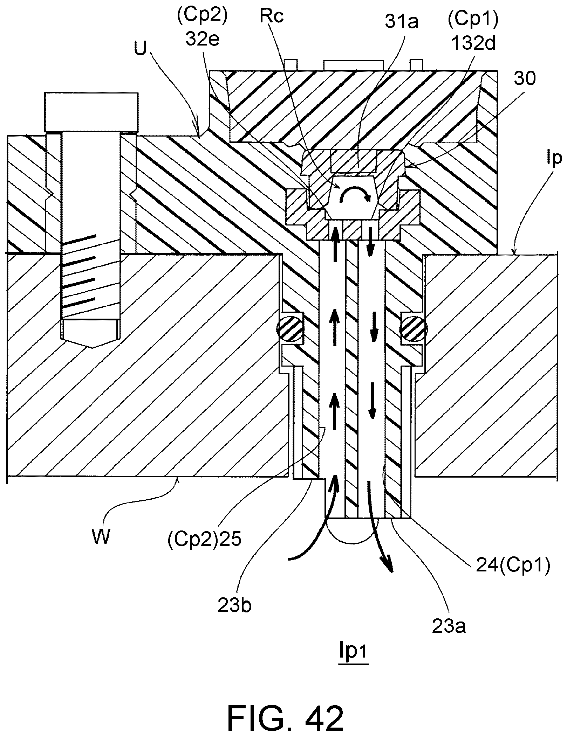

In the above embodiment, as the first ventilation hole and the second ventilation hole, the first ventilation hole 32d and the second ventilation hole 32e having the same opening area are shown. However, the present disclosure is not limited thereto. As shown in FIG. 42, a form may be adopted in which a first ventilation hole 132d has larger opening area than the second ventilation hole 32e.

In this embodiment, the first ventilation hole 132d has smaller passage resistance than the first ventilation hole 32d, and flowing is facilitated in the first communication path Cp1 (first passage 24 and first ventilation hole 132d) than in the second communication path Cp2 (second passage 25 and second ventilation hole 32e).

In the above embodiment, the first communication path Cp1 and the second communication path Cp2 are formed adjacent to each other and open at different positions with respect to the intake passage Ipi. That is, the first passage 24 is formed to open on the first end face 23a, and the second passage 25 is formed to open on the second end face 23b. However, the present disclosure is not limited thereto. Other forms may be adopted if a pressure difference can be set between the opening end of the first communication path and the opening end of the second communication path.

In the above embodiment, the sensor unit U is shown which includes, in addition to the pressure sensor 30, the temperature sensor 40 and the circuit board 50 that electrically connects the pressure sensor 30 and the temperature sensor 40. However, the present disclosure is not limited thereto. A sensor unit may be adopted in which the temperature sensor 40 is disused, and the circuit board 50 and the pressure sensor 30 are provided. Alternatively, a sensor unit may be adopted in which the temperature sensor 40 and the circuit board 50 are disused, and only the pressure sensor 30 is provided.

In the above embodiment, as a portion of the first communication path and the second communication path that communicate the pressure receiving chamber Rc of the pressure sensor 30 with the intake passage Ipi of the intake pipe Ip, the sensor unit U is shown which includes the sleeve 20 forming the first passage 24 and the second passage 25. However, the present disclosure is not limited thereto. A sensor unit equipped with a case including any other form than a sleeve may be adopted if the configuration includes the first communication path and the second communication path.

In the above embodiment, as a cylindrical sleeve protruding in the axis S direction from the case body 10, the sleeve 20 of a two-step cylindrical shape including the large diameter cylindrical part 22 and the small diameter cylindrical part 23 is shown. However, the present disclosure is not limited thereto. A cylindrical sleeve having the same outer diameter may be adopted.

In the above embodiment, as the pressure sensor, the pressure sensor 30 equipped with a semiconductor strain gauge is shown. However, the present disclosure is not limited thereto. A capacitance-type pressure sensor may be adopted, or a pressure sensor of any other type and forms may be adopted if including a pressure receiving part that receives the pressure of the intake air.

In the above embodiment, as the pressure sensor, the pressure sensor 30 including the sensor body 31 and the sensor cover 32 is shown. However, the present disclosure is not limited thereto. A pressure sensor without a sensor cover and with a pressure receiving part exposed to the outside may be adopted. In a first accommodation part in which the pressure sensor is accommodated, a pressure receiving chamber may be defined by the pressure sensor in cooperation with an inner wall surface of the first accommodation part of a case.

In the above embodiment, the following configuration is shown. The first openings 24a, 224a of the first passages 24, 224 open on the first end face 23a, the second openings 25a, 225a of the second passages 25, 225 open on the second end face 23b located at a position different from the first end face 23a. The collision walls 26a, 126a are formed as portions of the partition walls 26, 126. However, the present disclosure is not limited thereto.

For example, the following configuration may be adopted. The first opening of the first passage and the second opening of the second passage open on the same end face. The collision wall is formed to protrude continuously from the second end face on the second opening side. The first opening and the second opening are arranged side by side in a direction perpendicular to the flow direction of the intake air, and the intake air collides with the collision wall.

In the above embodiment, a case is shown where the first passages 24, 224 and the second passages 25, 225 are formed to define in cooperation the bent passages 24b, 25b, 224b, 225b that are three-dimensionally bent. However, the present disclosure is not limited thereto. It is possible that only one of the first passage and the second passage is formed to define a bent passage that is three-dimensionally bent, or the first passage and the second passage are each formed to define a bent passage that is three-dimensionally bent.

In the above embodiment, the sensor unit U is shown which includes, as a sensor detecting a state quantity of intake air, the pressure sensor 30 and the temperature sensor 40, and includes the circuit board 50 that electrically connects the pressure sensor 30 and the temperature sensor 40. However, the present disclosure is not limited thereto. A configuration including either the pressure sensor 30 or the temperature sensor 40 may be adopted.

In the above embodiment, as a case, the case Ca is shown which includes the case body 10 and the sleeves 20, 120, and 220 joined to the case body 10. However, the present disclosure is not limited thereto. A case in which a case body and a sleeve are integrally formed may be adopted.

As a sleeve constituting the case Ca, the sleeves 20, 120, and 220 are shown which have a two-step cylindrical shape including the large diameter cylindrical part 22 and the small diameter cylindrical part 23. However, the present disclosure is not limited thereto. A cylindrical sleeve having the same outer diameter may be adopted.

In the above embodiment, as a temperature sensor, the temperature sensor 40 is shown which constitutes a semiconductor chip (surface mount temperature sensor). However, the present disclosure is not limited thereto. A temperature sensor of any other type and form may be used.

As described above, in the sensor unit of the present disclosure, a flow of intake air can be actively generated in a passage leading from a detection part of a sensor to an intake passage, adhesion or freezing of a liquid or liquid-like substance such as fuel, moisture in the intake air, and blow-by gas can be suppressed or prevented, and a state quantity (pressure, temperature) of the intake air can be detected with high accuracy. Thus, of course, the sensor unit of the present disclosure is applicable to an intake system of an internal combustion engine in an automobile, a motorcycle or the like, and is also useful in an internal combustion engine of any other vehicle.

## Claims

1. A sensor unit (U), arranged in an intake pipe (Ip) of an internal combustion engine (E), **characterized by** comprising:
a sensor (30, 40), detecting a state quantity of intake air flowing through an intake passage (Ip₁) defined by the intake pipe (Ip); and
a case (Ca), accommodating the sensor (30, 40), wherein
the case (Ca) comprises: a first passage (24, 224) and a second passage (25, 225), communicating with each other and each opening to the intake passage (Ipi) so as to expose a detection part (Rc, 41) of the sensor (30, 40) to the intake air flowing through the intake passage (Ipi); and a collision wall (26a, 126a), colliding with the intake air flowing through the intake passage (Ip₁) in the vicinity of an opening of the second passage (25, 225).

2. The sensor unit (U) as claimed in claim 1, wherein
the collision wall (26a, 126a) comprises a guide part (126a, 126b) that guides the intake air flowing through the intake passage (Ipi) toward inside the second passage (25, 225).

3. The sensor unit (U) as claimed in claim 2, wherein
the guide part (126a, 126b) comprises a curved surface (126a) inclined toward inside the second passage (25, 225).

4. The sensor unit (U) as claimed in claim 3, wherein
the guide part (126a, 126b) comprises side surfaces (126b) continuously formed on both sides of the curved surface.

5. The sensor unit (U) as claimed in claim 1, wherein
the first passage (24, 224) has a first opening (24a, 224a) that opens on a first end face (23a) away from an inner wall surface (W) of the intake pipe (Ip) toward a central side; and
the second passage (25, 225) has a second opening (25a, 225a) that opens on a second end face (23b) closer to the inner wall surface (W) of the intake pipe (Ip) than the first opening (24a, 224a).

6. The sensor unit (U) as claimed in claim 5, wherein
the case (Ca) comprises a sleeve (20, 120, 220) extending in a predetermined axis (S) direction;
the sleeve (20, 120, 220) comprises a partition wall (26, 126) that defines the first passage (24, 224) and the second passage (25, 225) to extend adjacent to each other; and
the partition wall (26, 126) comprises the collision wall (26a, 126a).

7. The sensor unit (U) as claimed in claim 1, wherein
the sensor (30, 40) comprises: a pressure sensor (30), detecting a pressure of the intake air; and a temperature sensor (40), detecting a temperature of the intake air; and
the case (Ca) comprises: a case body (10), accommodating the temperature sensor (40) and the pressure sensor (30); and a sleeve (20, 120, 220), joined to the case body (10) and defining the first passage (24, 224), the second passage (25, 225), and the collision wall (26a, 126a).

8. The sensor unit (U) as claimed in claim 7, wherein
the first passage (24, 224) and the second passage (25, 225) are each formed to extend from a region (At) facing a detection part (41) of the temperature sensor (40) to the intake passage (Ipi); and
a detection part (Rc) of the pressure sensor (30) is formed to face the middle of the second passage (25, 225).

9. The sensor unit (U) as claimed in claim 8, wherein
the case body (10) comprises a recess (13) that exposes the detection part (41) of the temperature sensor (40); and
the sleeve (20, 120, 220) comprises a protruding wall (27) inserted into the recess (13) to define a portion of the first passage (24, 224) and the second passage (25, 225) in cooperation with the recess (13).

10. The sensor unit (U) as claimed in claim 8, wherein
the second passage (25, 225) comprises a bent passage (25b, 225b) between a region (Ap) facing the detection part (Rc) of the pressure sensor (30) and the region (At) facing the detection part (41) of the temperature sensor (40); and
the first passage (24, 224) comprises a bent passage (24b, 224b) in the middle thereof from the region (At) facing the detection part (41) of the temperature sensor (40) to a first opening (24a, 224a) that opens to the intake passage (Ipi).

11. The sensor unit (U) as claimed in claim 10, wherein
the first passage (24, 224) and the second passage (25, 225) comprise a bent passage (24b, 25b, 224b, 225b) formed by being three-dimensionally bent.

12. The sensor unit (U) as claimed in claim 10, wherein
an inner wall surface (224b₁, 225b₁) of the bent passage (24b, 25b, 224b, 225b) is formed curved so as to be continuous in a streamlined manner.

13. The sensor unit (U) as claimed in claim 8, wherein
the detection part (Rc) of the pressure sensor (30) comprises a pressure receiving chamber (Rc) exposed to the intake air; and
the pressure receiving chamber (Rc) is formed to communicate with the second passage (25, 225) through a communication hole (32c) having opening area smaller than passage area of the second passage (25, 225).

14. The sensor unit (U) as claimed in claim 13, wherein
the communication hole (32c) is arranged to face a second opening (25a, 225a) of the second passage (25, 225) that opens to the intake passage (Ipi) in an extension direction of the second passage (25, 225).

15. The sensor unit (U) as claimed in claim 7, comprising:
a circuit board (50), having the pressure sensor (30) and the temperature sensor (40) electrically connected thereto and accommodated in the case body (10).

16. The sensor unit (U) as claimed in claim 15, wherein
the temperature sensor (40) is a surface mount temperature sensor mounted on the circuit board (50).

17. The sensor unit (U) as claimed in claim 1, comprising:
a first communication path (Cp1) and a second communication path (Cp2), wherein
the first communication path (Cp1) comprises the first passage (24, 224) and a first ventilation hole (32d, 132d), the first passage (24, 224) having predetermined passage area and a first passage length (L₁), the first ventilation hole (32d, 132d) leading to the first passage (24, 224) and having opening area smaller than the passage area of the first passage (24, 224); and
the second communication path (Cp2) comprises the second passage (25, 225) and a second ventilation hole (32e), the second passage (25, 225) having the same passage area as the first passage (24, 224) and a second passage length (L₂) shorter than the first passage length (L₁), the second ventilation hole (32e) leading to the second passage (25, 225) and having opening area smaller than the passage area of the second passage (25, 225).

18. The sensor unit (U) as claimed in claim 17, wherein
the sensor (30, 40) comprises a pressure sensor (30) that detects a pressure of the intake air;
the pressure sensor (30) comprises a sensor body (31) and a sensor cover (32), the sensor body (31) comprising a pressure receiving part (31a), the sensor cover (32) being connected to the sensor body (31) so as to cover the pressure receiving part (31a) and define a pressure receiving chamber (Rc); and
the first ventilation hole (32d, 132d) and the second ventilation hole (32e) are formed in the sensor cover (32).

19. The sensor unit (U) as claimed in claim 18, wherein
the first ventilation hole (32d, 132d) and the second ventilation hole (32e) are formed in an offset manner close to a side part outside a central region of the pressure receiving chamber (Rc).

20. The sensor unit (U) as claimed in claim 18, wherein
the case (Ca) comprises a case body (10) and a sleeve (20, 120, 220), the case body (10) comprising a joint surface (11) joined to the intake pipe (Ip), the sleeve (20, 120, 220) having a cylindrical shape protruding in a predetermined axis (S) direction from the case body (10); and
the first passage (24, 224) and the second passage (25, 225) are formed to extend within the sleeve (20, 120, 220).

21. The sensor unit (U) as claimed in claim 18, comprising:
a temperature sensor (40), detecting a temperature of the intake air in the intake pipe (Ip); and
the case (Ca) comprises a second accommodation part (18) that accommodates the temperature sensor (40).

22. The sensor unit (U) as claimed in claim 21, wherein
the case (Ca) comprises a case body (10) and a sleeve (20, 120, 220), the case body (10) comprising a joint surface (11) joined to the intake pipe (Ip), the sleeve (20, 120, 220) having a cylindrical shape protruding in a predetermined axis (S) direction from the case body (10); and
the first passage (24, 224), the second passage (25, 225), and the second accommodation part (18) are formed to extend within the sleeve (20, 120, 220).

23. The sensor unit (U) as claimed in claim 1, wherein
the case (Ca) comprises: a case body (10), comprising a joint surface (11) joined to the intake pipe (Ip); a sleeve (20, 120, 220), protruding in a predetermined axis (S) direction from the case body (10) and defining the first passage (24, 224), the second passage (25, 225), and the collision wall (26a, 126a); and an annular groove (22a), formed on an outer periphery of the sleeve (20, 120, 220) and having an annular seal member (Sr) fitted therein.

24. The sensor unit (U) as claimed in claim 23, wherein
the sleeve (20, 120, 220) comprises: a large diameter cylindrical part (22), protruding from the joint surface (11); and a small diameter cylindrical part (23), continuous with the large diameter cylindrical part (22); and
the annular groove (22a) is formed in the large diameter cylindrical part (22).
